(19) Europäisches Patentamt / European Patent Office / Office européen des brevets

(11) **EP 1 901 260 A1**

(12) **EUROPEAN PATENT APPLICATION**
published in accordance with Art. 153(4) EPC

(43) Date of publication:
**19.03.2008 Bulletin 2008/12**

(51) Int Cl.:
*G09B 29/00* (2006.01)   *G01C 21/00* (2006.01)
*G06T 11/60* (2006.01)   *G09B 29/10* (2006.01)

(21) Application number: **05758356.9**

(22) Date of filing: **07.07.2005**

(86) International application number:
**PCT/JP2005/012598**

(87) International publication number:
**WO 2007/007376 (18.01.2007 Gazette 2007/03)**

(84) Designated Contracting States:
**DE**

(71) Applicant: **MATSUSHITA ELECTRIC INDUSTRIAL CO., LTD.**
**Osaka 571-8501 (JP)**

(72) Inventors:
• YAMASHITA, Tetsuro c/o Matsushita El. Ind. Co. Ltd
**Osaka-shi, Osaka 540-6319 (JP)**

• **TAKABE, Yoshiyuki c/o Matsushita El. Ind. Co. Ltd.**
**Osaka-shi , Osaka 540-6319 (JP)**

• **ADACHI, Shinya c/o Matsushita El. Ind. Co. Ltd.**
**Osaka-shi, Osaka 540-6319 (JP)**

(74) Representative: **Pautex Schneider, Nicole Véronique et al**
**Novagraaf International SA**
**25, Avenue du Pailly**
**1220 Les Avanchets - Geneva (CH)**

(54) **MAP INFORMATION CORRECTION DEVICE, MAP INFORMATION CORRECTION METHOD, PROGRAM, INFORMATION PROVIDING DEVICE USING THE PROGRAM, AND INFORMATION ACQUISITION DEVICE**

(57) The invention provides a map information correcting apparatus, a map information correcting method, and a program capable of correcting the positional deviation of an object due to an error between different maps. In addition, the invention provides an information providing apparatus and an information acquiring apparatus using the map information correcting apparatus.

An information acquiring apparatus 600 includes a positional information receiving unit 601 that receives information on an object including information a position reference object close to (near) an object that corresponds to a digital map data base A (507) provided on an information provider side, a contour position specifying unit 602 for specifying a contour position, a representative point extracting unit 604 for extracting representative points from the contour position, and an internal shape correcting unit 605 for executing a predetermined interpolation process, using positional information in the digital map database A (507) and a digital map database B (603), to correct at least one of the position and shape of the object so as to be suitable for the second map.

*FIG. 15*

EP 1 901 260 A1

**Description**

Technical Field

The present invention relates to a map information correcting apparatus, a map information correcting method, a program, and an information providing apparatus and an information acquiring apparatus using the map information correcting apparatus.

Background Art

A vehicle information communication system (VICS) for providing traffic information, such as information on traffic jams or information on traffic control, through a dedicated receiver has been used as an intelligent transportation system (ITS).

In the vehicle information communication system, when a VICS center (a traffic information providing center that performs centralized management on traffic information) edits and processes traffic information and transmits the processed traffic information in real time, the traffic information is displayed on the map used by a car navigation system as figures or characters, so that a route guide is performed considering information on traffic jams.

When the traffic information (characters or images) transmitted from the traffic information providing center is accurately superimposed on the map of a user apparatus (on which a background image or main roads are drawn) or a route guide including traffic information is performed, the position where traffic information is superimposed or a section of the road where a traffic jam occurs should be accurately specified on the map of the user apparatus.

In general, the map used by the traffic information providing center is different from the map used by an apparatus for receiving traffic information (user apparatus), which causes an error between the maps.

Therefore, when the position of an object is specified on the map of the user apparatus on the basis of positional information (for example, latitude and longitude information) transmitted from the center, the positional deviation of the object between the maps occurs due to the error between different maps, which makes it difficult to accurately specify the position of the object.

For example, it is assumed that a predetermined mark is arranged on the right side of a road.

The center specifies the position of the mark by using the latitude and longitude. Then, when the mark is arranged at the designated position on the map of the user apparatus, the mark deviates from the designated position and is arranged on the left side of the road due to the positional deviation of the background image or the deviation of the shape of the road (the mark should be arranged on the right side of the road).

Therefore, a technique for absorbing the error between different maps (a technique for accurately specifying the position of an object on the map of a user apparatus, which is referred to as a 'position referring technique') is needed.

The inventor has proposed a technique for specifying an accurate position on the map of the user apparatus using the shape of a road as a position reference object (Patent Document 1). For example, it is assumed that a traffic accident occurs near a road. In this case, the traffic information providing center transmits a plurality of coordinate data indicating the shape of a neighboring section of the road as well as positional information on the position where the traffic accident occurs. The positional information indicating the position where the traffic accident occurs is transmitted as coordinate data based on the section of the road.

First, the user apparatus determines the shape of a road on the basis of the plurality of coordinate data (for example, determines whether the shape of the road is a straight line or a curved line), and searches a section where the determined shape is identical with the shape of a road on the map (shape matching).

When the shapes of the roads are matched with each other, it is determined whether the section of the road transmitted from the traffic information providing center corresponds to a section of the road on the map. The position where the traffic accident occurs is represented by the coordinates based on the section of the road where the traffic accident occurs. Therefore, when the section of the road is specified, the position where the traffic accident occurs is also specified.

The main roads are drawn on almost all maps and have high universality. Therefore, when a section of the road can be specified on the map of the user apparatus by the shape matching of the road, it is possible to accurately specify a predetermined position (for example, the position where a traffic accident occurs) on the map of the user apparatus using the section of the road as a reference point. In this way, it is possible to absorb an error between different maps and thus effectively use traffic information. Patent Document 1: JP-A-2001-41757

Disclosure of the Invention

Problem that the Invention is to Solve

As described above, in general, the intelligent transportation system (ITS) according to the related art provides traffic information.
However, it is expected that advanced map information will be provided in the near future.
For example, it is considered that a service for providing information on the shape of a site, facilities in the site, and the internal structures of the facilities as well as information on the position of an object, such as a restaurant or a sight spot, and a POI (point of interest), or a service for allowing an information providing center to transmit information on a minute road network that is not on a rough electronic map used by a user apparatus such that the information is displayed on a display unit on the user apparatus will be actively provided.
In the existing VICS or car navigation system, for example, a POI is provided as point information (the POI is represented by one icon). It is inevitable that the POI is represented by point information in a map drawn on a scale of 1:2500. However, it is expected that minute digital map data corresponding to a map drawn on a scale of 1:500 will be provided in the near future.
In this case, as described above, for example, the structure of a room (for example, a leased place in a building or a conference room in the building), a parking lot, or the overall structure of facilities constructed in a large area is likely to be represented as a POI. In this case, the POI is represented by a surface.
However, even when information on the plan-view POI can be provided (or, for example, information on a minute road network that is not displayed on the electronic map used by a user apparatus can be provided), as described above, in many cases, the map used by a map information providing apparatus is different from the map used by a map information receiving apparatus, which makes it difficult to accurately display map information due to an error between the maps.
That is, even when advanced map information is provided, an object related to the provided information may not be displayed at an accurate position of the map used by the user apparatus, or the geometrical shape included in the provided map information may not match the geometrical shape of the map used by the user apparatus, which causes the geometrical shapes of the two maps to deviate from each other.
The invention has been designed to solve the above-mentioned problems, and it is an object of the invention to provide a map information correcting apparatus and a map information correcting method capable of correcting the positional deviation of an object due to an error between different maps.

Means for Solving the Problem

According to an aspect of the invention, there is provided a map information correcting apparatus that corrects the positional deviation of information on an object between different electronic maps. The apparatus includes: a map information receiving unit that receives information on the object including information on a position reference object arranged close to or near the object that corresponds to a first electronic map; a position referring unit that specifies the position of the position reference object on the basis of the received information on the object; and a correcting unit that performs an interpolation process, using information on the position of at least one reference point that is extracted from the position reference object on the first electronic map and information on the position of the reference point on a second electronic map, to correct at least one of the position and shape of the object so as to be suitable for the second electronic map.
According to the above-mentioned structure, it is possible to correct the positional deviation of an object related to an electronic map due to an error between different maps.
In the map information correcting apparatus according to the above-mentioned aspect, preferably, the correcting unit performs the interpolation process using at least one of a parallel translation process and a rotation process, on the basis of the deviation between the position of the one reference point extracted from the position reference object on the first electronic map and the position of the one reference point on the second electronic map, to correct the position of the object on the first electronic map so as to be suitable for the second electronic map. According to this structure, it is possible to correct the position (spot) of an object on the basis of information on the positional deviation of the reference point extracted from the position reference object.
In the map information correcting apparatus according to the above-mentioned aspect, preferably, the one reference point extracted from the position reference object is the center of the position reference object. According to the above-mentioned structure, it is possible to obtain information for correcting the position of an object (information on a position error between maps) from the displacement of the center of the position reference object on the first and second electronic maps.
In the map information correcting apparatus according to the above-mentioned aspect, preferably, the correcting unit performs at least one of a weight interpolation process, a bilinear interpolation process, and affine transformation, using information on the positions of a plurality of reference points that are extracted from the position reference object on the first electronic map and information on the positions of the reference points on the second map, to correct the geometrical shape of the object on the first electronic map so as to be suitable for the second electronic map. According to the above-mentioned structure, even when the shapes (geometrical shapes) of sites or facilities on different maps are different from each other due to an error between different maps, it is possible to accurately superimpose the object on the first electronic map on the second electronic map.

In the map information correcting apparatus according to the above-mentioned aspect, preferably, the position reference object is a road. According to the above-mentioned structure, since a road having high universality is used on the map, it is possible to perform correction regardless of the type of map used.

In the map information correcting apparatus according to the above-mentioned aspect, preferably, the plurality of reference points extracted from the position reference object are a plurality of intersections on the road. According to the above-mentioned structure, a road having high universality is used as a position reference object on the map and a plurality of intersections included in the road are extracted from the position reference object and are then used as reference points. Therefore, road information having high universality is used, which makes it possible to perform correction regardless of the type of map used.

In the map information correcting apparatus according to the above-mentioned aspect, preferably, the positions of the plurality of intersections are specified by coordinate information indicating the positions of the intersections or attribute information of the intersections, or by the determination result of branched places based on the shape of the road. According to the above-mentioned structure, it is possible to specify the positions on the intersections on the map by any one of a method using coordinate information (for example, latitude and longitude), a method using attributes, such as the names of intersections (for example, a method of specifying the positions of intersections using the name of an intersection, such as an exit intersection of a facility A), and a method of allowing an apparatus using the second electronic map to examine a branched position on the basis of shape data of a road, to recognize the branched portion as an intersection, and to specify the position of the intersection.

In the map information correcting apparatus according to the above-mentioned aspect, preferably, the position referring unit specifies the position of the position reference object on the second electronic map by matching using shape information of the position reference object. According to the above-mentioned structure, it is possible to specify the position of the position reference object by using shape matching.

In the map information correcting apparatus according to the above-mentioned aspect, preferably, the position referring unit determines the shape of the position reference object on the basis of the shortest route linking a plurality of representative points, and specifies the position of the determined position reference object on the second map by matching using shape information of the determined position reference object. According to the above-mentioned structure, when shape matching is used to specify the position and shape of the position reference object on the second electronic map, information for specifying a plurality of representative points, not shape information, is given, and a shape obtained by linking the representative points at the shortest distance is used as the shape of the position reference object.

In the map information correcting apparatus according to the above-mentioned aspect, preferably, the position reference object is a road, and the shape of the road is determined by linking a plurality of intersections whose positions are specified through the shortest route. In addition, preferably, the position referring unit specifies the position of the road, which is the position reference object, on the second map by matching using shape information of the determined road. According to the above-mentioned structure, when a road is used as the position reference object and the position and shape of the road on the second electronic map are specified by shape matching of the road, information for specifying a plurality of intersections, not shape information of the road, is given, and a shape obtained by linking the intersections at the shortest distance is used as the shape of the road.

In the map information correcting apparatus according to the above-mentioned aspect, preferably, the position reference object has a shape surrounding a portion of or the entire object. According to the above-mentioned structure, particularly, when the geometrical shape is corrected (reformed), displacement information on a plurality of reference points are needed to correct the position of one point, which is an object to be corrected, and it is preferable to arrange a plurality of reference points around the one point, which is an object to be corrected, in a good balance in order to accurately correct the shape of the object. Therefore, the position reference object (which provides a plurality of reference points) is arranged so as to surround the object to be corrected, so that a plurality of reference points arranged in a good balance can be extracted.

In the map information correcting apparatus according to the above-mentioned aspect, preferably, the object is a POI (point of interest) represented by any one of a surface, a line, and a point or a combination thereof, or a portion of the POI. According to the above-mentioned structure, it is possible to correct the deviation of the position or shape of a plan-view POI.

In the map information correcting apparatus according to the above-mentioned aspect, preferably, the object is a road that exists on the first electronic map but does not exist on the second electronic map. According to the above-mentioned structure, it is possible to provide information on a minute road network that is not in the second electronic map and effectively use the information.

According to another aspect of the invention, there is provided a map information correcting method of correcting the positional deviation of information on an object between different electronic maps. The method includes the steps of: receiving information on the object including information on a position reference object close to or near the object that corresponds to a first electronic map; specifying the position of the position reference object on the basis of the received information on the object; and performing an interpolation process using information on the position of at least one reference point that is extracted from the position reference object on the first electronic map and information on the position of the reference point on a second electronic map to correct at least one of the position and shape of the object so as to be suitable for the second electronic map.

According to the above-mentioned aspect, it is possible to correct the positional deviation of an object related to an electronic map due to an error between different maps.

According to still another aspect of the invention, there is provided a program for allowing a computer to execute the components of the above-mentioned map information correcting apparatus. The program makes it possible to correct the positional deviation of an object related to an electronic map due to an error between different maps.

According to yet another aspect of the invention, there is provided an information providing apparatus including the map information correcting apparatus. In addition, according to still yet another aspect of the invention, there is provided an information acquiring apparatus including the map information correcting apparatus. According to the above-mentioned aspects, it is possible to provide an information providing apparatus and an information acquiring apparatus capable of correcting the positional deviation of an object related to an electronic map due to an error between different maps.

Effects of the Invention

According to the invention, it is possible to provide a map information correcting apparatus, a map information correcting method, and a program capable of correcting the positional deviation of an object related to an electronic map due to an error between different maps, and it is also possible to provide an information providing apparatus and an information acquiring apparatus using the map information correcting apparatus.

Brief Description of the Drawings

Figs. 1A to 1C are diagrams illustrating examples of a POI (point of interest), such as a restaurant or a sight spot. More specifically, Fig. 1A is a diagram illustrating an object represented by a point according to the related art, Fig. 1B is a diagram illustrating the representation of a plan-view POI (building), and Fig. 1C is a diagram illustrating a plan-view POI (site) and a road arranged close to the POI.

Figs. 2A and 2B are diagrams illustrating necessity to correct the shape or position of an object when the object on a first map is superimposed on a second map. More specifically, Fig. 2A is a diagram illustrating necessity to correct the position of an object, and Fig. 2B is a diagram illustrating necessity to correct (reform) the geometrical shape of a portion of or the entire object.

Figs. 3A to 3C are diagrams illustrating problems when the positional or shape deviation occurs between first and second maps in providing map information on a plan-view POI. More specifically, Fig. 3A is a diagram illustrating the shape of the plan-view POI on the first map, Fig. 3B is a diagram illustrating the shape of the plan-view POI on the second map, and Fig. 3C is a diagram illustrating a problem when a portion of the POI on the first map is superimposed on the second map.

Fig. 4 is a diagram illustrating an example of a plan-view POI on a map used by a map information (POI information) providing apparatus.

Fig. 5 is a diagram illustrating an image of a map used by a map information (POI information) receiving apparatus and an image on which the received plan-view POI is superimposed.

Fig. 6 is a diagram illustrating a POI image on a map when the position of a road is specified by shape matching of the road and position specification information thereof is used to correct the position of an object in a lower layer.

Fig. 7 is a diagram illustrating a POI image on a map when the position of a site is specified by shape matching of the site and position specification information thereof is used to correct the position of an object in a lower layer.

Figs. 8A to 8E are diagrams examples of a process of correcting the overall internal structure of an object on the basis of the contour shape of the object (a process of reforming the shape of the object).

Figs. 9A to 9D are diagrams illustrating the principle of an interpolation process performed to correct the position or geometrical shape of an object.

Fig. 10 is a diagram illustrating an example of a method of ensuring reference points when the shape or position of a plan-view POI is corrected.

Figs. 11A to 11C are diagrams illustrating a problem when a minute road network that is not on the second map is displayed on the second map.

Figs. 12A to 12D are diagrams illustrating an example of a process of correcting the position and shape of a minute road network on the basis of the displacements of a plurality of reference points extracted from the shape of a main road, when the minute road network that is not on the second map is displayed on the second map.

Figs. 13A to 13D are diagrams illustrating various position referring methods when a road is used as a position reference object.

Figs. 14A to 14C are diagrams illustrating an example of a process of correcting the shape or position of an internal portion using one linear position reference object or a plurality of linear position reference objects.

Fig. 15 is a block diagram illustrating the structure of a map information communication system (map information utilizing system).

Fig. 16 is a flowchart illustrating the operation of a map information providing apparatus.

Fig. 17 is a flowchart illustrating the operation of a map information receiving apparatus.

Fig. 18 is a diagram illustrating a hierarchized data structure corresponding to the example shown in Fig. 13A.

Fig. 19 is a diagram illustrating a hierarchized data structure corresponding to the example shown in Fig. 13B.

Fig. 20 is a diagram illustrating a hierarchized data structure corresponding to the example shown in Fig. 13C.

Fig. 21 is a diagram illustrating a data structure a method in which a map information providing apparatus specifies a position reference object, but a map information receiving apparatus independently selects position reference information.

Fig. 22 is a diagram illustrating a hierarchized data structure corresponding to the example (in which a plurality of position reference objects are used) shown in Fig. 14B.

Fig. 23 is a diagram illustrating the basic concept of the data structures shown in Figs. 18 to 22.

Reference Numerals

| 500: | INFORMATION PROVIDING APPARATUS |
|------|----------------------------------|
| 502: | OBJECT DETERMINING UNIT |
| 503: | OBJECT DATABASE |
| 504: | DATA EXTRACTING UNIT |
| 505: | CONTOUR POSITION REFERENCE INFORMATION EXTRACTING UNIT |
| 506: | INTERNAL SHAPE EXTRACTING UNIT |
| 507: | DIGITAL MAP DATABASE A |
| 508: | POSITIONAL INFORMATION TRANSMITTING UNIT |
| 600: | INFORMATION ACQUIRING APPARATUS |
| 601: | POSITIONAL INFORMATION RECEIVING UNIT |
| 602: | CONTOUR POSITION SPECIFYING UNIT |
| 603: | DIGITAL MAP DATABASE B |
| 604: | REPRESENTATIVE POINT EXTRACTING UNIT |
| 605: | INTERNAL SHAPE CORRECTING UNIT |
| 606: | INTERNAL SHAPE UTILIZING UNIT |

Best Mode for Carrying Out the Invention

Hereinafter, exemplary embodiments of the invention will be described with reference to the accompanying drawings.

(First embodiment)

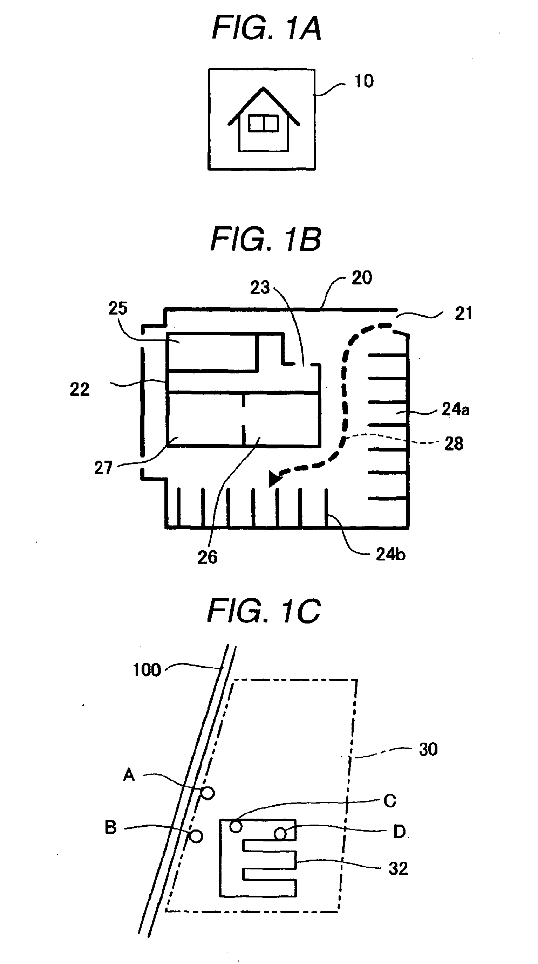

First, the supply of POI information will be described. Figs. 1A to 1C are diagrams illustrating examples of the representation of POI (point of interest), such as a restaurant or a sight spot. More specifically, Fig. 1A is a diagram illustrating an image represented by a point according to the related art, Fig. 1B shows a plan-view image of a POI (building), and Fig. 1C is a plan-view image of a POI (site) and a road close to the POI.

As shown in Fig. 1A, in the related art, the POI (for example, a restaurant or a sight spot) is represented by an icon 10.

That is, the POI is represented by a point. Since only the position of the POI is represented by a point, the amount of information that can be indicated is very small.

Therefore, in this embodiment of the invention, it is assumed that plan-view POI information capable of representing a complicated structure is provided.

That is, in this embodiment, it is assumed that a service for hierarchically recognizing POI by any one of a surface, a line, and a point or a combination thereof (for example, a surface, a combination of a surface and a point, or a combination of a surface, a line, and a point), representing the POI as a hierarchical data structure, and providing the POI to a user apparatus is provided.

In Fig. 1B, a two-dimensional POI including a site and a building in the site is hierarchically divided into the shape 20 of the site, parking areas 24a and 24b provided in the site, the outline 22 of the building in the site, and the structure of three conference rooms, that is, a main conference room 25, a conference room A (reference numeral 26), and a conference room B (reference numeral 27). In Fig. 1B, the POI is represented by a combination of a surface and lines.

In Fig. 1B, reference numeral 21 denotes an entrance of the building, and reference numeral 23 denotes an entrance of the conference room. In addition, an arrow in Fig. 1B indicates a guide route in the site.

When the POI is displayed on a display unit of a car navigation apparatus, such as a GPS, or a mobile telephone of a user, the user can park a car at a predetermined parking lot and go to a desired conference room without any difficulties.

In Fig. 1C, the POI is hierarchically represented by a combination of surfaces, lines, and points, and is divided into a sight 30, the shape of a building 32 in the sight 30, a point A indicating an entrance of the site, a point B indicating the position of a parking lot, a point C indicating an entrance of the building 32, and a point D indicating a conference room (destination).

When the POI is displayed on a display unit of a mobile telephone of a user corresponding to a GPS, the user can enter into the site, park a car at a predetermined parking lot, and go to a conference room where the meeting will be held without any difficulties.

In the cases of the structures shown in Figs. 1B and 1C, since the internal structure of the POI is a nested structure, the POI is sequentially hierarchized according to the internal structure thereof, and each component of the hierarchized plan-view POI is processed into data, which makes it possible to effectively generate map information. The shape (in the case of surfaces or lines) or the position (in the case of points) of each of the hierarchized components may be represented as data by absolute coordinates or relative coordinates.

Next, the supply and use of map information of a plan-view POI will be described below, but the invention is not limited thereto. For example, this embodiment of the invention can also be used to provide a user with information on detailed road data that a user apparatus does not have (which will be described later).

When map information of a plan-view object (the POI or a road system) is generated on the basis of a first electronic map, the map information is transmitted to a receiver side, and the receiver side specifies the position or the geometrical shape of the object and displays the object so as to be superimposed on a second electronic map different from the first electronic map, the position or the shape of the object is needed to be collected. Next, the necessity for the correction will be described below.

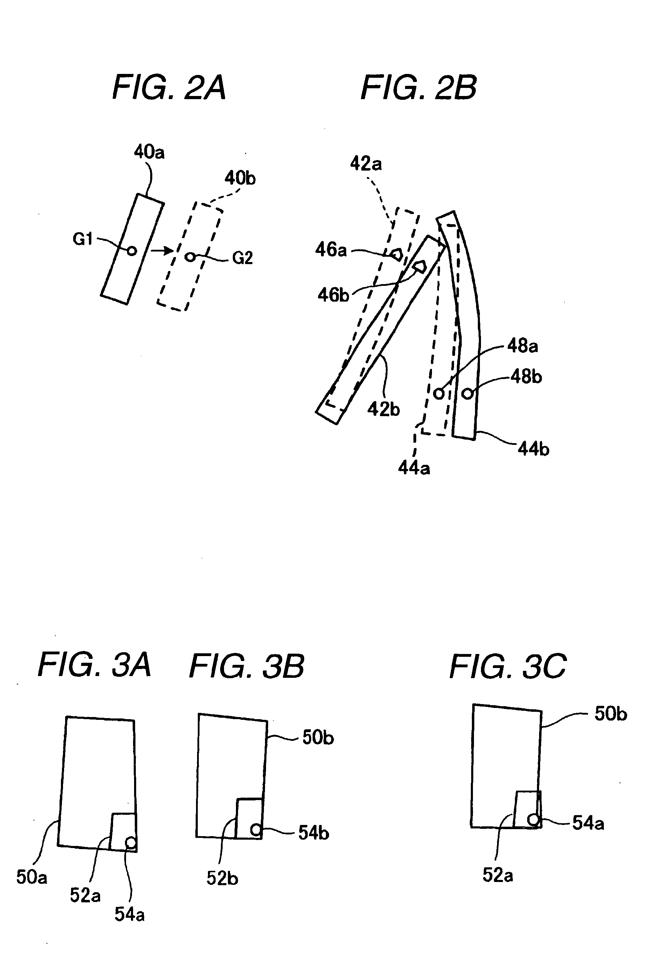

Figs. 2A and 2B are diagrams illustrating the necessity to correct the position or the shape of an object when the object on the first map is superimposed on the second map. More specifically, Fig. 2A is a diagram illustrating the necessity to correct the position of the object, and Fig. 2B is a diagram illustrating the necessity to correct (reform) the geometrical shape of a portion of or the entire object.

In Fig. 2A, the position of an object 40a (which is represented by a solid line) of the first map is different from the position of an object 40b (which is represented by a dotted line) on the second map.

For example, it is assumed that absolute coordinates of the object 40a on the first map are designated and the object 40a is colored and superimposed on the second map.

In this case, when a positional error occurs as shown in Fig. 2A, the position of the object 40b on the second map is inaccurate, which makes it difficult to provide accurate map information.

In this case, the displacement of the position of the center G1 of the object 40a and the position of the center G2 of the object 40b is measured. Then, the position of the object 40a deviates from the original position by the measured displacement on the second map (parallel translation) so that the object 40a is superimposed with the object 40b. Both parallel translation and rotation may be performed.

In Fig. 2B, the positions and the geometrical shapes of two objects 42a and 44a (in this embodiment, subway stations) on the first map are different from those of objects 42b and 44b.

In addition, positional deviation occurs between station stalls 46a and 48a on the first map and station stalls 46b and 48b on the second map.

When an error occurs between the shapes of facilities on the first and second maps, only the parallel translation of the object is insufficient to perform the accurate superposition of the positions of objects on the second map. Therefore, in this case, the geometrical shapes of the objects are needed to be reformed.

Figs. 3A to 3C are diagrams illustrating defects when the deviation between the positions of objects on the first and second maps or between the shapes of the objects occurs in providing map information on a plan-view POI. More specifically, Fig. 3A is a diagram illustrating the shape of a plan-view POI on the first map, Fig. 3B is a diagram illustrating the shape of a plan-view POI on the second map, and Fig. 3C is a diagram illustrating a problem when a portion of the plan-view POI on the first map is superposed on the second map.

In Fig. 3A, reference numerals 50a and 50b denote the shapes of buildings (for example, hotels) on the first and second maps, respectively, and reference numerals 52a and 52b indicate the shapes of lobbies. In addition, reference numerals 54a and 54b denote waiting places.

Then, the latitude and longitude of the lobby 52a and the waiting place 54a of the POI shown in Fig. 3A are acquired, and are superposed on the second map on the basis of coordinate information thereof. As a result, as shown in Fig. 3C, a portion of the lobby 52a protrudes from the building 50b.

In this case, even when a position referring technique (for example, shape mapping) is used to correct the position of the center of the lobby 52a, the shape matching is not achieved. Therefore, in this case, the shape of the lobby needs to be reformed.

Next, a process of correcting the 'position' and the 'geometrical shape' of an object to absorb an error between different maps will be described in detail.

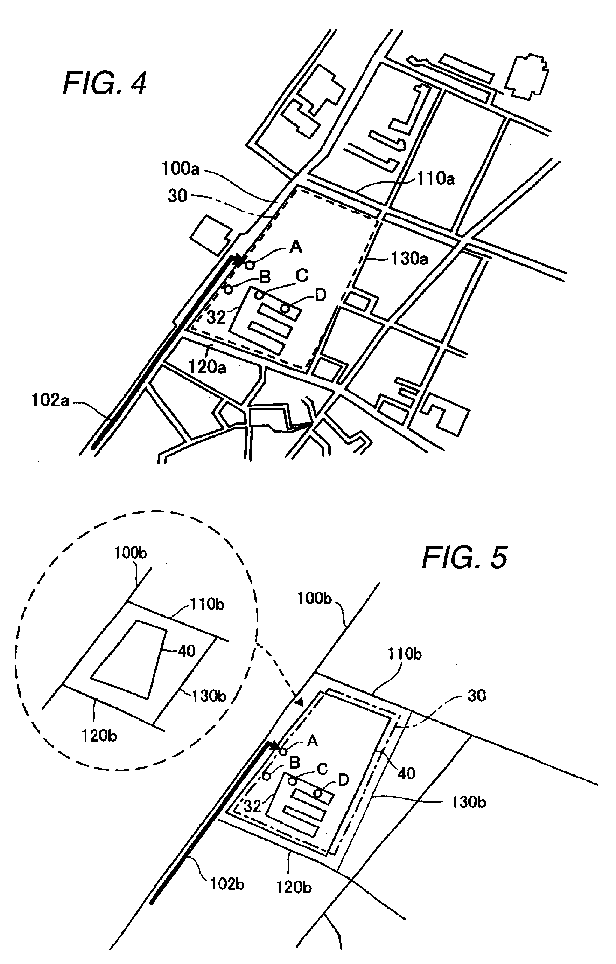

First, a process of correcting the 'position' of an object will be described in detail with reference to Figs. 4 to 7.

Fig. 4 is a diagram illustrating an example of a plan-view POI on a map used for an apparatus for providing map information (POI information).

As shown in Fig. 4, plan-view POI information provided to a user includes the shape of a company site (which is represented by a one-dot chain line and has reference numeral 30), information A on a point indicating an entrance of the site, information B on a point indicating a parking lot, the shape of a building 32 in the site 30, information C on a point indicating an entrance of the building 32, information D on a point indicating a conference room where the meeting will be held, a main road 100a adjacent to a left end of the building 30, and a bold arrow 102a, serving as a route guide, arranged along the main road.

In Fig. 4, reference numerals 110a, 120a, and 130a denote roads that extend so as to surround the site 30.

Fig. 5 is a diagram illustrating the image of a map used by an apparatus for receiving map information (POI information) and an image when the received plan-view POI is displayed so as to be superposed on the map.

The content of the map used by the apparatus for receiving map information is shown on the upper left of Fig. 5 as a circle represented by a dotted line. As can be seen from Fig. 5, the accuracy of the map is considerably lower than that of the map used by the map information providing apparatus.

Roads represented by reference numerals 100b, 110b, 120b, and 130b correspond to the roads 100a, 110a, 120a, and 130a shown in Fig. 4, respectively.

Further, reference numeral 40 denotes a company site, and corresponds to the site 30 of Fig. 4.

When the received POI information created on the basis of the map shown in Fig. 4 is superposed on a different map (having low accuracy) shown on the upper left of Fig. 5, positional deviation occurs as shown on the right side of Fig. 5.

That is, the position of the site 30 represented by a one-dot chain line deviates from the position of the site 40 represented by a solid line diagonally to the upper right direction, and the bold arrow 102b, serving as a route guide, deviates from the main road 100b to the right.

The positional deviation causes a visual problem, and is not suitable for use.

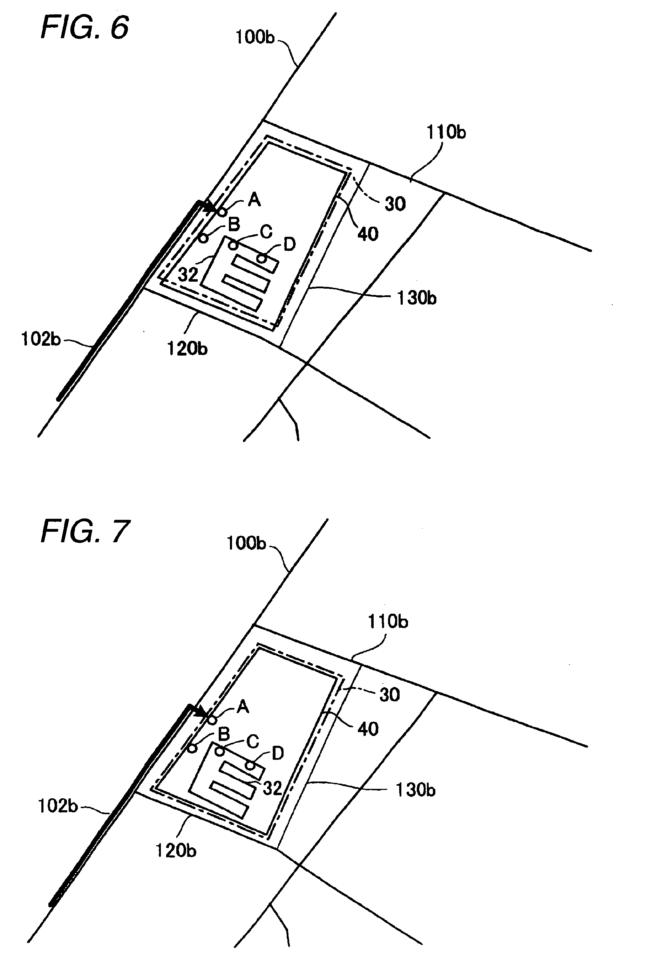

Therefore, as shown in Fig. 6, a process of specifying the position and a process of correcting the position are performed.

Fig. 6 is a diagram illustrating a POI image on the map when the position of a road is specified by shape matching and position specification information thereof is used to correct the position of an object in a lower layer.

In Fig. 6, the position of a road is specified by shape matching, and a lower layer (the positions of a site, an entrance of the site, a parking lot, a building, an entrance of the building, and a conference room) is corrected on the basis of information on the movement of a reference point obtained by the position specification.

That is, the entire POI including the site 30 is slightly moved to the left side.

The positional deviation in the horizontal direction is almost removed by the position correcting process. However, the positional deviation in the vertical direction is not removed.

Next, as shown in Fig. 7, position specification and position correction are performed, and the position of the POI is matched with the map used by the user apparatus.

Fig. 7 is a diagram illustrating a POI image on the map when the position of a site is specified by shape matching and position specification information thereof is used to correct the position of an object in a lower layer.

In Fig. 7, the position of the site is specified by shape matching, and a lower layer (the positions of an entrance of the site, a parking lot, a building, an entrance of the building, and a conference room) is corrected on the basis of information on the movement of a reference point obtained by the position specification.

That is, the entire POI including the site 30 is slightly moved in the lower left direction.

In this way, the plan-view POI is completely matched with the map used by the user apparatus, and thus superposition display without incongruity is realized.

Next, a process of reforming (correcting) the geometrical shape of an object will be described below.

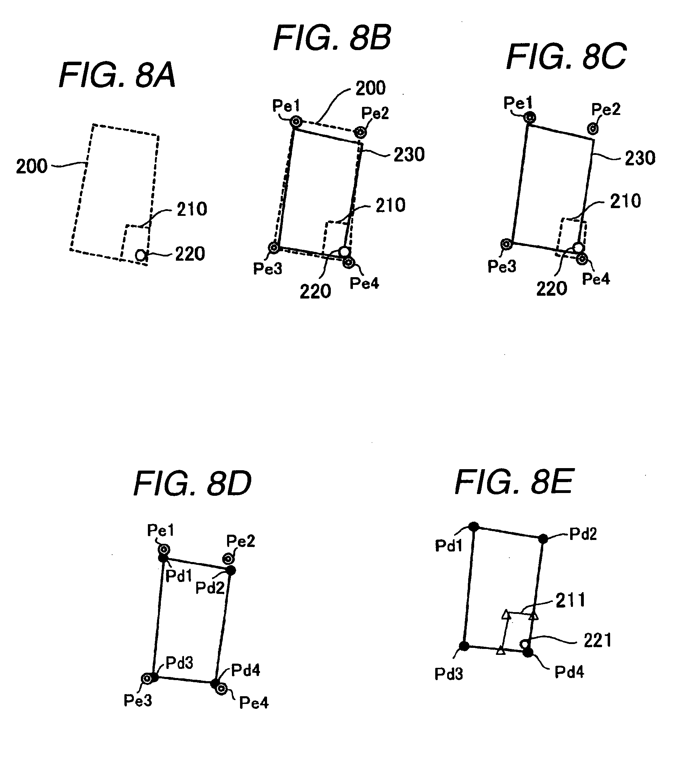

Figs. 8A to 8E are diagrams illustrating a process of correcting the overall shape of the internal structure of an object on the basis of the outward appearance of the object.

In Fig. 8A, reference numeral 200 denotes the outward appearance of a building (for example, a hotel) on the first map, and reference numeral 210 denotes the outward appearance of a lobby. In addition, reference numeral 220 denotes a waiting place.

Information items indicating the outward appearance of the building (hotel), the internal shape thereof, and the positions of points are hierarchically obtained, and are converted into map data.

As shown in Figs. 8B to 8E, the outward shape of the building (hotel), the shape of the lobby, and the position of the waiting place are corrected on the second map on the basis of the map data.

That is, as shown in Fig. 8B, a plurality (in this embodiment, four) of reference points (representative points) Pe1 to Pe4 are extracted from the outward appearance of the building (hotel) (which has a substantially trapezoidal shape, is denoted by reference numeral 200, and is represented by a dotted line) on the basis of the map data.

In Fig. 8B, reference numeral 230 denotes the outward appearance of the building (hotel) on the second map (which is represented by a solid line in Fig. 8B).

Next, as shown in Fig. 8C, the shape of the building (hotel) is reproduced on the second map on the basis of the map data, and the reproduced shape of the building (hotel) is compared to the shape thereof on the second map to determine whether the shapes thereof are matched with each other (shape matching). Then, it is specified whether the shape of the building (hotel) reproduced on the basis of the map data corresponds to the shape thereof on the second map (position specification by shape matching). In this way, the outward appearance (and the position) 230 of the building (hotel) is specified on the second map.

Next, as shown in Fig. 8D, reference points Pd1 to Pd4 (which are points corresponding to points Pe1 to Pe4 of four corners of the building whose position and shape are specified by shape matching) are extracted from four corners of the outward appearance (and the position) 230 of the building (hotel) whose position is specified by shape matching.

Then, as shown in Fig. 8E, a variation in the position of each point is calculated on the basis of positional information of the points Pe1 to Pe4 and the points Pd1 to Pd4 corresponding to the points Pe1 to Pe4, and a predetermined 'interpolation process' is performed on the basis of the variation in the position of each point to correct the shapes of the lobby and the waiting place in the building (hotel). In Fig. 8E, reference numeral 211 denotes the corrected shape of the lobby, and reference numeral 221 denotes the corrected shape of the waiting place.

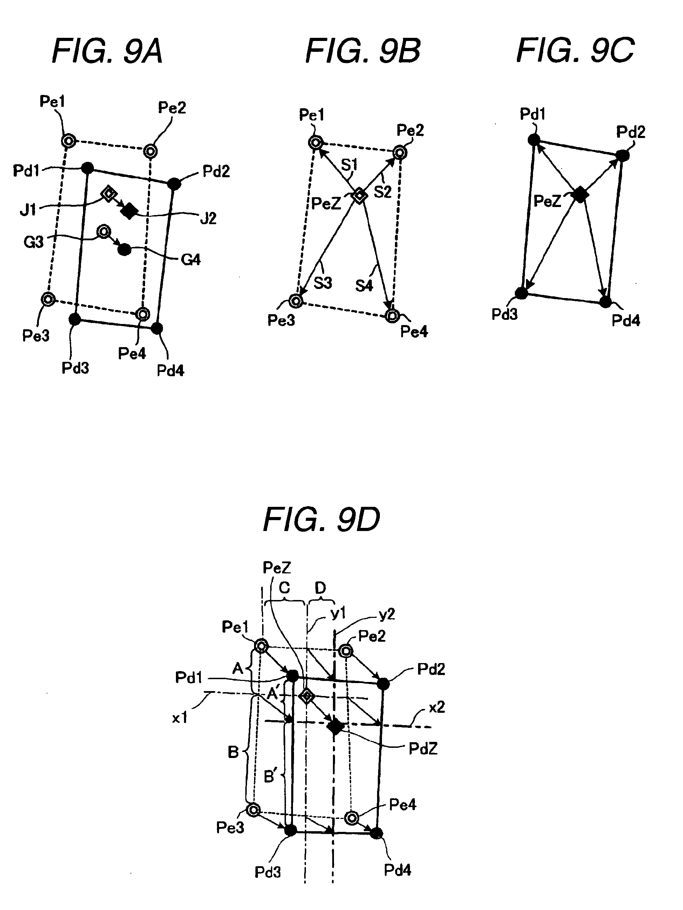

Next, the principle (basic principle) of the 'interpolation process' performed to correct the position or the geometrical shape of an object will be described with reference to Fig. 9.

The 'interpolation process' means a method of correcting the position or the geometrical shape of an object, and is a process of arranging the geometrical shape or the position of a point that is irregularly changed at an appropriate position on the basis of known displacement information on one or more reference points.

The appropriate correction makes it possible to accurately superpose an object on the second map without positional deviation.

Figs. 9A to 9D are diagrams illustrating the principle of the 'interpolation process' performed in order to the position or the geometrical shape of an object.

Fig. 9A is a diagram illustrating parallel translation (the simplest interpolation method) used to correct the 'position' of an object.

In Fig. 9A, 'G3' indicates the center of an object (which has four representative points Pe1 to Pe4 at four corners represented by a dotted line) before the positions are specified by shape matching, and 'G4' indicates the center of an object (which has four representative points Pd1 to Pd4 at four corners represented by a solid line) after the positions are specified by shape matching.

Coordinates of the center G3 and the center G4 (on the second map) have been known already and thus the displacement (correction amount) from the center G3 to the center G4 has been known.

Meanwhile, a point J1 is a point to be interpolated (the position of a point after the interpolation process is unclear). The point J1 is parallely moved by a distance corresponding to the displacement between the centers G3 and G4. A point after the parallel movement is a point J2.

Since an object having an area can be considered as a set of a plurality of points, the position of the entire object can be shifted by parallely moving the points forming the object.

Next, 'weighting interpolation' used to correct the 'geometrical shape (and the position)' of an object will be described with reference to Figs. 9B and 9C.

The 'weighting interpolation' is a process of estimating the degree of the influence of each reference point on a point to be interpolated on the basis of the distance between the point to be interpolated and each of a plurality of reference points adjacent to the point to be interpolated, dividing the degree of the influence by the distance, and calculating the position of the interpolated point by a weighting operation considering the total sum of the displacements of the reference points.

In Fig. 9B, 'PeZ' denotes a point to be interpolated, and four points Pe1 to Pe4 around the point to be interpolated are reference points. In addition, 'S1 to S4' denote distances between the point PeZ to be interpolated and the reference points Pe1 to Pe4.

Similarly, in Fig. 9C, 'PdZ' denotes a point after interpolation, and four points Pd1 to Pd4 around the interpolated point are reference points after displacement.

In Fig. 9B, the four reference points Pe1 to Pe4 are arranged in a good balance so as to surround the point PeZ to be interpolated. When the four reference points Pe1 to Pe4 are individually displaced without being correlated with each other (however, the displacement of each point has been known), the point PeZ to be interpolated is also influenced by each of the reference points Pe1 to Pe4.

In this case, it is considered that the degree of the influence is inversely proportional to the distance to each of the reference points. That is, the displacement of the reference point closest to the point to be interpolated has the greatest effect on the point PeZ to be interpolated.

Therefore, a weighting interpolation operation of weighting reciprocal values of the distances between the point PeZ and the reference points Pe1 to Pe4 is performed to calculate X and Y coordinates of the point (PdZ in Fig. 9C) which is obtained by interpolating the point PeZ by using the following Expression 1:

[Expression 1]

$$\text{PdZ (X coordinate)} = \frac{\sum_{i=1}^{n} \Delta Xi \cdot \frac{1}{Si}}{\sum_{i=1}^{n} \frac{1}{Si}},$$

and

$$\text{PdZ (Y coordinate)} = \frac{\sum_{i=1}^{n} \Delta Yi \cdot \frac{1}{Si}}{\sum_{i=1}^{n} \frac{1}{Si}},$$

where

$$Si = \sqrt{\{Pei(X) - PeZ(X)\}^2 + \{Pei(Y) - PeZ(Y)\}^2},$$

$$\Delta Xi = Pei(X) - Pdi(X),$$

and

$$\Delta Yi = Pei(Y) - Pdi(Y).$$

The geometrical shape (for example, the outward appearance) of an object having an area can be considered as a set of a plurality of points forming the shape. Therefore, a weighting operation of weighting reciprocal values of the distances between the points and a plurality of reference points is performed to calculate coordinates of each point, thereby reforming (and moving the points) the geometrical shape (for example, the outward appearance) of the object.

In the weighting interpolation, the number of reference points is not limited to four.

The weighting interpolation can be used even when a plurality of reference points are arranged in a good balance around the point to be interpolated (when conditions are strict). Therefore, the weight interpolate is considered as the most effective method of correcting the position or shape of an object on the second map in this embodiment of the invention.

In this embodiment, the weighting interpolation is used, but bilinear interpolation may be used. The basic principle of the bilinear interpolation is similar to that of the weighting interpolation.

In the bilinear interpolation, a circle having a point to be interpolated as the origin is drawn, the circle is divided into four regions along an X-axis and a Y-axis, reference points are provided in the four regions, and linear interpolation is performed on the basis of the displacements of the four reference points to determine the position (coordinates) of the point, which is an interpolation target, after interpolation.

Next, 'affine transformation' used to correct the 'geometrical shape (and position)' of an object will be described with reference to Fig. 9D.

The 'affine transformation' is a transformation method of dividing the displacements of four reference points around a point to be transformed into 'parallel displacement in the X direction', 'parallel displacement in the Y direction', 'the amount of rotation of the X coordinate', 'the amount of rotation of the Y coordinate', 'magnification in the X direction', and 'magnification in the Y direction', and of calculating the displacement (correction amount) of an unknown point using the divided displacements as parameters. Basically, the affine transformation performs the movement and deformation of a figure or a shape by a combination of Euclidean geometrical linear transformation and parallel translation.

In the affine transformation, geometrical characteristics of points on a straight line of the original figure or parallel lines of the original figure do not vary after transformation.

In Fig. 9D, the point PeZ is a point before interpolation (a point to be interpolated), and the point PdZ is a point after interpolation.

As shown in Fig. 9D, four reference points Pe1 to Pe4 are used to realize the movement of points by the affine transformation. The four reference points Pe1 to Pe4 are displaced to the points Pd1 to Pd4, respectively (this displacement has been known).

In this case, the point PdZ obtained by performing affine transformation on the point PeZ is calculated as follows.

First, two straight lines x1 and y1 passing through the point PeZ are determined. In this case, the straight line x1 has an intermediate gradient between the gradient of a line linking the reference points Pe1 and Pe2 and the gradient of a line linking the reference points Pe3 and Pe4.

Similarly, the straight line y1 has an intermediate gradient between the gradient of a line linking the reference points Pe1 and Pe3 and the gradient of a line linking the reference points Pe2 and Pe4.

Here, the length ratio of segments on the left and right sides of the point PeZ on the straight line x1 is C:D. In addition, the length ratio of segments on the left and right sides of the point PeZ on the straight line y1 is A:B.

Next, straight lines x2 and y2 are determined on the plane defined by the four reference points Pd1 to Pd4 after transformation such that the length ratios A:B and C:D are maintained.

Then, coordinates of an intersection of the straight lines x2 and y2 are calculated, and the calculated coordinates are used as coordinates of the point PdZ after the affine transformation.

The geometrical shape (for example, the outward appearance) of an object having an area can be considered as a set of a plurality of points forming the shape. Therefore, a weighting operation of weighting reciprocal values of the distances between the points and a plurality of reference points is performed to calculate coordinates of each point, thereby reforming (and moving the points) the geometrical shape (for example, the outward appearance) of the object.

Next, a method of ensuring reference points required for an interpolation process on the map will be described below.

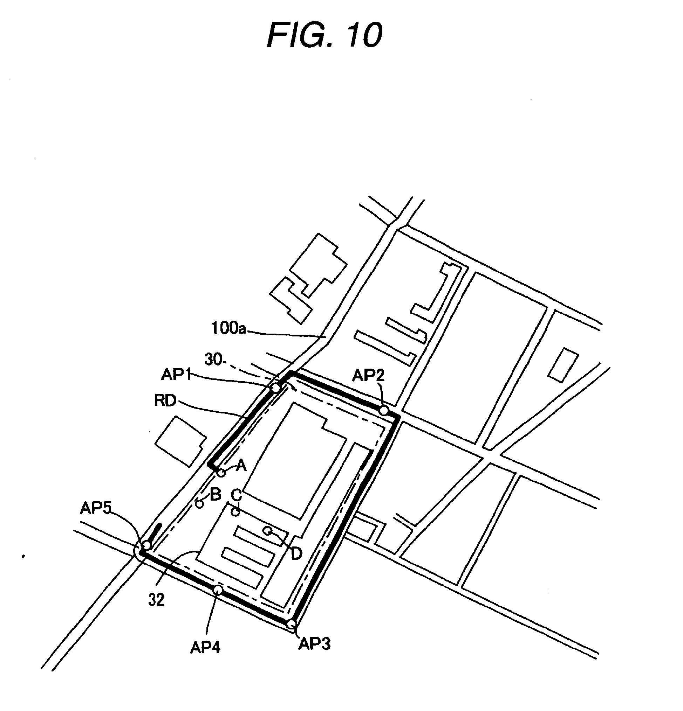

Fig. 10 is a diagram illustrating an example of a method of ensuring reference points when the shape or position of a plan-view POI is corrected.

The POI shown in Fig. 10 is the same as those shown in Figs. 4 to 7.

That is, as shown in Fig. 10, a plan-view POI includes, as components, the shape of a company site (which is represented by a one-dot chain line and has reference numeral 30), information A on a point indicating an entrance of the site, information B on a point indicating a parking lot, the shape of a building 32 in the site 30, information C on a point indicating an entrance of the building 32, information D on a point indicating a conference room where the meeting will be held.

In this case, it is to be noted that four roads 100a, 110a, 120a, and 130a exist so as to surround the site 30. As described above, the roads have high universality and are more likely to exist on any type of map.

In addition, the roads exist so as to surround an object (plan-view POI) superposed on the map. Therefore, when the position of the object on the second map can be determined by, for example, shape mapping using the roads as position reference objects, it is possible to effectively extract a plurality of reference points (which is preferably arranged around an object to be corrected (four corners) in a good balance, as shown in Fig. 9) required to correct the shape or position of the plan-view POI from the shapes of the roads.

In Fig. 10, the shapes of the roads surrounding the plan-view POI (which is represented by a bold line) are used as position reference objects, and five points AP1 to AP5 on the roads are used as reference points.

As such, it is most effective to use the shapes of the roads surrounding an object whose shape or position will be corrected as position reference objects.

However, the invention is not limited thereto. As described with reference to Fig. 9, a plurality of reference points should satisfy the following conditions: coordinates (latitude and longitude) of each of the reference points before and after interpolation (that is, before and after the positions of the position reference objects are specified on the second map) are clear (this is used to determine the displacement of the reference points), and preferably, the reference points should be arranged around an object whose position or shape will be corrected (in the vicinities of four corners of the object) in a good balance.

Any object can be used as a position reference object as long as it can satisfy the conditions. In addition, if a plurality of reference points can be extracted, the position reference object does not need to completely surround an object whose position or shape will be corrected.

(Second embodiment)

In the second embodiment, various variations of the method of interpolating (correcting) or specifying the position using the shapes of roads will be described.

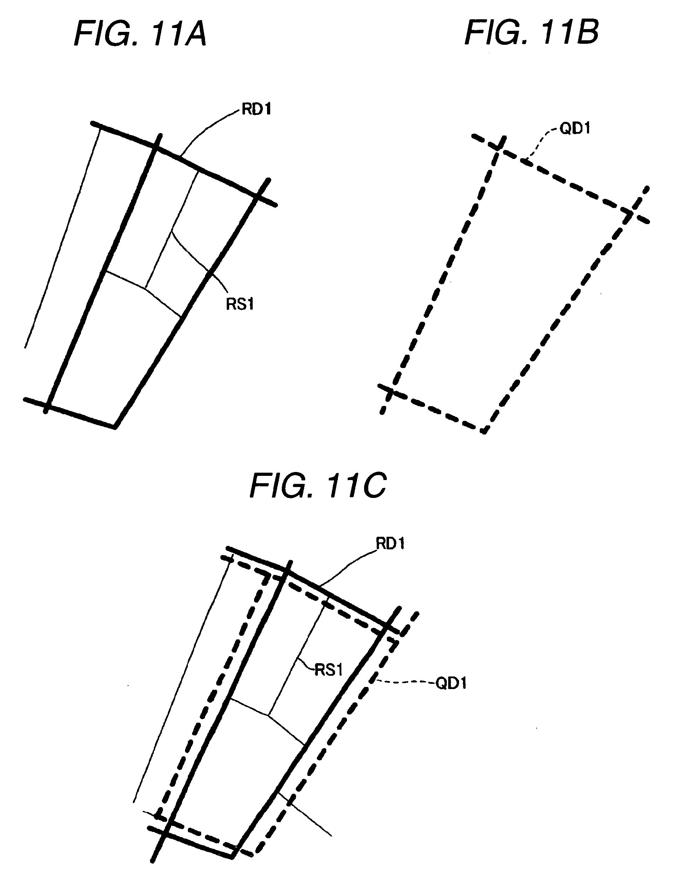

Figs. 11A to 11C are diagrams illustrating a problem caused when a detailed road network that is not marked on the second map is displayed on the second map.

Fig. 11A shows a main road (which is represented by a bold line) RD1 and a narrow road (road network) RS1 existing inside the main road RD1 on the first map.

Fig. 11B shows a main road QD1 (which corresponds to the main road RD1 shown in Fig. 11A and is represented by a bold dotted line) on the second map.

The shape of the main road QD1 on the second map is not completely identical with the shape of the main road RD1 on the first map (due to an error between the maps).

Further, the accuracy of the second map is lower than that of the first map, and the narrow road RS1 existing on the first map is not on the second map.

Therefore, information on the map image of Fig. 11A that is generated on the basis of the first map is received and is then superposed on the second map. In this way, it is also possible to display the narrow map RS1 on the second map.

Fig. 11C is a diagram illustrating a map image obtained by superimposing the maps shown in Figs. 11A and 11B.

As shown in Fig. 11C, since the shapes of the main roads RD1 and QD1 are identical with each other, it is difficult for a user to view the roads and the accuracy of road information provided (for example, positional information of the main road RD1 and the narrow road RS1) is lowered.

Therefore, the following process is performed: the main road is used as a position reference object; a plurality of reference points are extracted from the shape of the main road; shape matching is performed on the second map to specify the absolute position of the main road; and the shape of a narrow road inside the main road is corrected on the basis of the displacements of the plurality of reference points before and after the position specification.

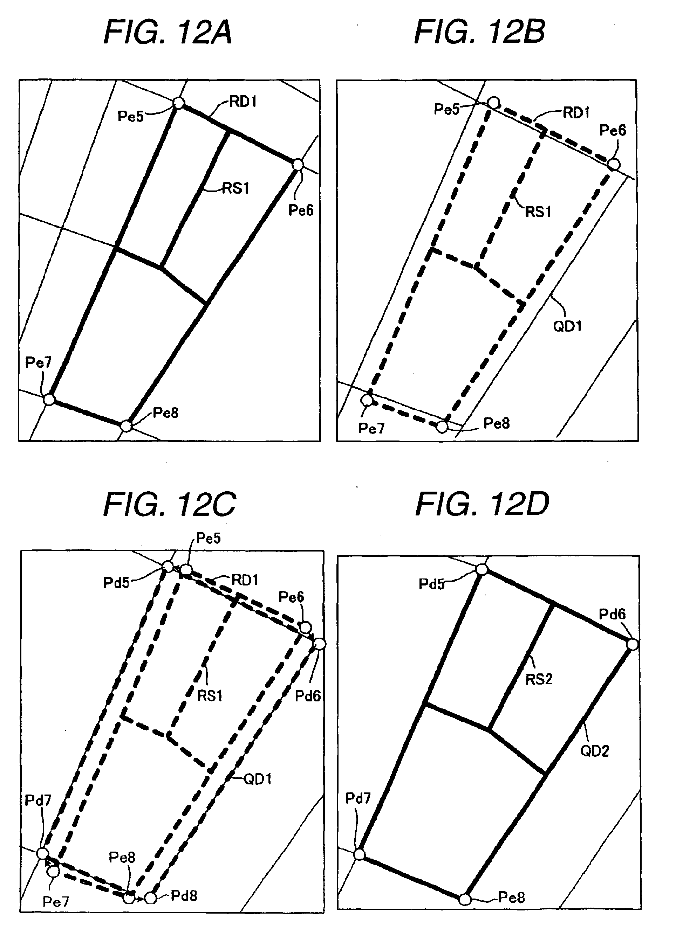

Figs. 12A to 12D are diagrams illustrating an example of a process of correcting the position and shape of a narrow road network on the basis of the displacements of a plurality of reference points extracted from the shape of a main road when a detailed road network that is nor marked on the second map is displayed on the second map.

As shown in Fig. 12A, map information provided is specified on the first map (in this case, map information on the main road RD1 and the narrow road RS1 is provided), and four corners of the main road RD1 are represented by reference points Pe5 to Pe8.

Then, positional information of a plurality of coordinate points for specifying the shapes of the main road RD1 and the narrow road RS1 and positional information of the reference points Pe5 to Pe8 are generated, and the information is transmitted to a receiver side, that is, an apparatus using the second map.

Next, as shown in Fig. 12B, the apparatus having received the information reproduces the shapes of the main road RD1 and the narrow road RS1 on the basis of the received information and superimposes the shapes of the roads on the second map.

The shape of the reproduced main road RD1 is not completely identical with the shape of the main road QD1 that has been extracted as a background image of the second map.

Next, as shown in Fig. 12C, it is determined whether a road matched with the shape of the main road RD1 (having a shape close to the shape of the main road RD1) is on the second map on the basis of the shape of the main road RD1 (a matching process).

In this way, it is determined that the main road RD1 on the first map corresponds to the main road QD1 on the second map, so that the position of the main road RD1 is specified.

Then, it is determined whether the four reference points Pe5 to Pe8 are displaced to points Pd5 to Pd8 before and after the position specification on the basis of the result of the position specification.

Subsequently, various interpolation processes described with reference to Figs. 9A to 9D are performed on a plurality of points (representative points) forming the shape of the narrow road RS1 on the basis of information of the displacement after and before the position specification of the reference points to newly map (arrange) theses points on the second map.

Then, as shown in Fig. 12D, the position and shape of the narrow road (road RS1 on the first map) are corrected so as to be suitable for the second map. In Fig. 12D, the corrected main road is denoted by reference numeral QD2, and the corrected narrow road is denoted by reference numeral RS2.

In this way, it is possible to accurately superimpose information on the narrow road on the second map.

In this embodiment, the method of correcting roads is described, but the invention is not limited thereto. A combination of the method of correcting the road and the method of correcting the position or shape of a POI that has been described in the first embodiment may be used. For example, a POI existing at the edge of a narrow road in a congested area of the city and a narrow street reaching the POI may be provided, or a narrow street may be provided as a target in order to accurately indicate the position of the POI standing on a trunk road.

Next, various position referring methods when a road is used as a position reference object will be described below.

In Fig. 10 or Figs. 12A to 12D, the position of a road, which is a position reference object, is specified by a plurality of coordinate points. That is, data indicating the shape of a road is transmitted as map information to a receiver side, and the receiver side reproduces the shape of the road.

However, a method of specifying the shape of a road, which is a position reference object, is not limited thereto.

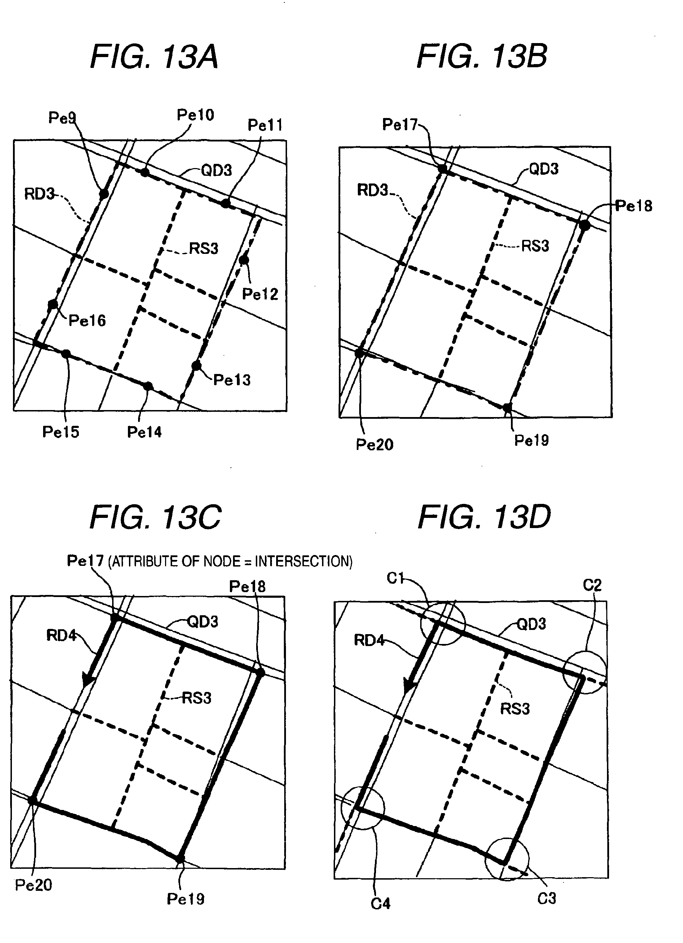

Figs. 13A to 13D are diagrams illustrating various position referring methods when a road is used as a position reference object.

In Fig. 13A, an apparatus for providing map information transmits coordinate data of a plurality of representative points Pe9 to Pe16 to an apparatus on the receiver side. Then, the apparatus on the receiver side searches the shortest route linking the representative points, links the representative points forming the shortest route, and specifies the shape of a road RD3 (which is represented by a one-dot chain line), which is a position reference object.

Thereafter, the apparatus performs map matching (shape matching) to determine whether the shape of the road RD3 on the first map corresponds to the shape of a road QD3 drawn on the background of the second map, thereby specifying the position of the road. Then, the apparatus corrects the position or shape of a narrow road RS3 on the basis of the displacements of a plurality of reference points Pe9 to Pe15.

In Fig. 13B, the apparatus for providing map information transmits coordinate data of intersections Pe17 to Pe20 or data indicating attributes of the intersections, such as intersection names, are transmitted to the apparatus on the receiver side. Then, the apparatus having received the coordinate data specifies the positions of the intersections Pe17 to Pe20.

Then, the apparatus searches the shortest route among the specified intersections Pe17 to Pe20, and uses the shape of the shortest route as the shape of the road RD3, which is a position reference object.

Next, the same process as that in Fig. 13A is performed to specify the position of the road and to correct the narrow road RS3 inside the road RD3.

In Fig. 13C, the apparatus for providing map information transmits 'shape data' indicating the shape of a road RD4 (which is represented by a bold arrow), which is a position reference object), and 'intersection node data (information specifying coordinates of intersections or attributes of the intersections, such as intersection names)' to the apparatus on the receiver side.

The apparatus having received the map information specifies the position of the road using the shape data and specifies the positions of a plurality of intersections Pe17 to Pe20, which are reference points, using the intersection node data. In addition, the apparatus corrects the position and shape of the narrow road RS3 on the basis of the plurality of reference points.

In Fig. 13D, the apparatus for providing map information transmits only the 'shape data' indicating the shape of a road RD4 (which is represented by a bold arrow), which is a position reference object, to the apparatus on the receiver side.

In this case, data indicating the shapes of roads in the places C1 to C4 near the intersections is added to the shape data.

The apparatus on the map information receiver side also determines the shapes of the roads near the intersections when reproducing the shape of the road on the basis of the shape data, and determines the branched places C1 to C4 as the intersections. Then, the apparatus uses the intersections as reference points for correction.

Next, a process performed when an object having a hairline shape is used as a position reference object and a process performed when a plurality of position reference objects are used will be described below.

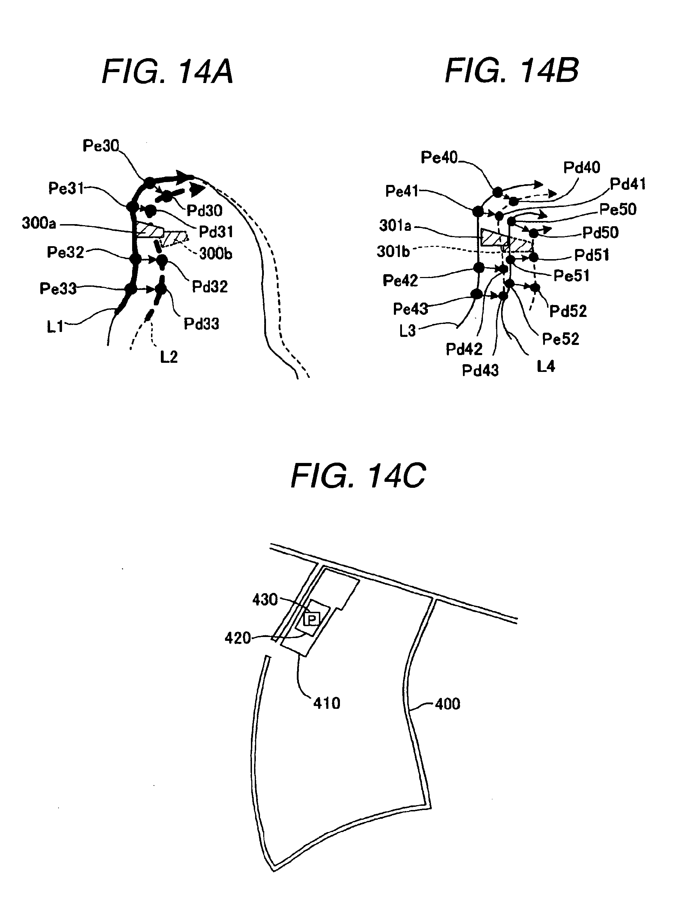

Figs. 14A to 14C are diagrams illustrating an example of a process of correcting the internal shape or position using one or more position reference objects having a hairline shape.

In this embodiment, for example, the shape of a road surrounding an object related to map information provided is used as a position reference object, and a reference point for correction is obtained from the shape of the position reference object.

However, when it is possible to specify an absolute position on the second map and acquire information of the reference point for correction, a road not surrounding the object can be used as the position reference object.

Further, a plurality of position reference objects may be used. When the plurality of position reference objects are used, it is expected that correction will be more accurately performed than when the object surrounded by the road is used.

In Fig. 14A, the position (and shape) of a house 300a will be corrected, and the position of the house 300a is shifted to a point 300b by correction.

In order to perform the correction, a plurality of reference points Pe30 to Pe33 are extracted from the shape of a portion of a road L1 (a portion represented by a bold solid line in Fig. 14A: which is a curved portion, but does not surround the house) near the house.

When map matching is performed, it is determined that the road L1 on the first map corresponds to a road L2 on the second map, and the position of the road on the second map is specified.

The positions of the plurality of reference points Pe30 to Pe33 are shifted to the positions of points Pd30 to Pd33 on the basis of the result of the position specification of the road L2 by the map matching. Then, the position (and shape) of the house 300a is corrected on the basis of information on the displacements of the reference points.

In Fig. 14B, a position specifying process, a process of extracting reference points, and a shape correcting process are performed using the shape partial shapes (which include curved lines but do not surround the house) of two roads L3 and L4 as position reference objects.

The road L3 includes a plurality of reference points Pe40 to Pe43. The road L4 includes a plurality of reference points Pe50 to Pe52.

The positions of the plurality of reference points are shifted to the positions of points Pd40 to Pd43 and Pd50 to Pd52 on the basis of the result of map matching.

The position (and shape) of a house 301a is corrected on the basis of information on the displacements of these reference points. In this way, the position (and shape) of the house is positioned at a point 301b.

In Fig. 14C, a plurality of position reference objects are used to specify the position of a POI and the detailed shapes of roads that are not on the second map.

In Fig. 14C, roads 400 and 410 are marked on both the first and second maps, but a road 420 and a POI 430 are not marked on the second map.

In this case, a map information providing apparatus transmits information on the roads 400, 410, and 420 and the POI 430 to an apparatus on the receiver side. Then, the apparatus on the receiver side specifies the positions of the roads 400 and 410 by map matching, extracts reference points from the shapes of the two roads whose positions have been specified, and corrects the shape or position of the road 420 or the POI 430.

In this way, it is possible to accurately reproduce detailed map information on the second map.

(Third embodiment)

In this embodiment, the structure and operation of a map information communication system (map information utilizing system) and a basis example of a data structure of map information provided will be described below.

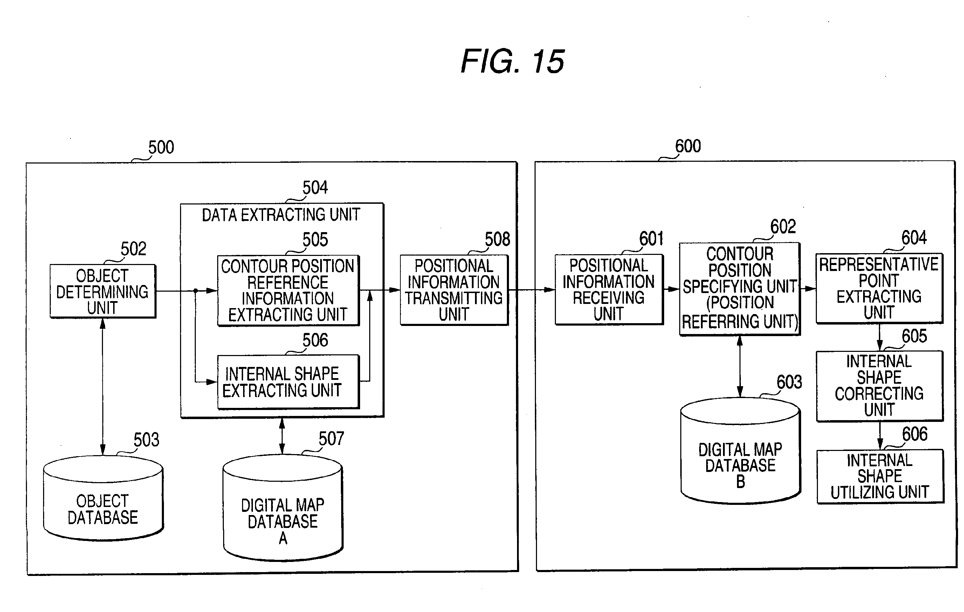

Fig. 15 is a block diagram illustrating the structure of a map information communication system (map information utilizing system).

As shown in Fig. 15, an information providing apparatus 500 on the map information provider side includes an object determining unit 502 that determines an object, which is an information receiver, an object database 503, a data extracting unit 504 (which includes an external position reference information extracting unit 505 and an internal shape extracting unit 506), a digital map database A (reference numeral 507), and a positional information transmitting unit 508.

An information acquiring apparatus 600 on the map information receiver side includes a positional information receiving unit 601, a contour position specifying unit 602, a digital map database B (reference numeral 603), a representative point extracting unit 604, an internal shape correcting unit 605, and an internal shape utilizing unit 606. The information acquiring unit 600 has a map information correcting function of correcting the positional deviation of an object related to an electronic map due to an error between different electronic maps. The information providing apparatus may also have the map information correcting function.

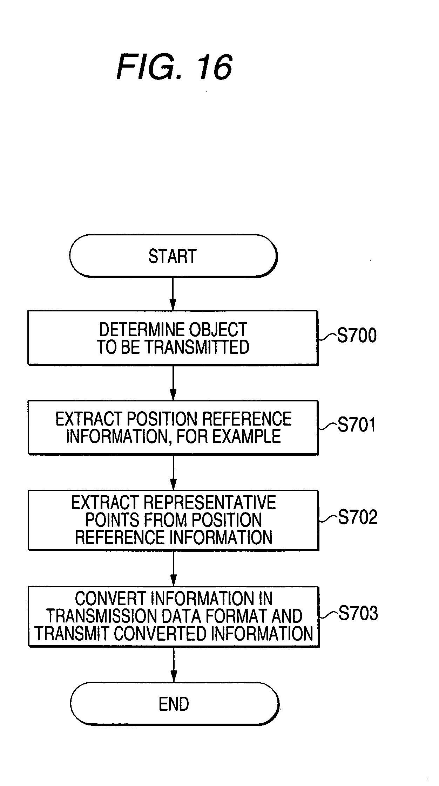

Fig. 16 is a flowchart illustrating the operation of the information providing apparatus 500.

The object determining unit 502 shown in Fig. 15 searches the object database 503 to determine an object to which information will be provided (S700).

Then, the data extracting unit 504 shown in Fig. 15 extracts map information of the object determined by the object determining unit 502 and a position reference object (for example, the shape of a main road) from the digital map database A (reference numeral 507), hierarchizes the information into contour position reference information and information on the internal structure of the object (S701).

Then, the data extracting unit 504 extracts representative points (reference points for correction) and processes information for specifying the positions thereof into data (S702) .

Subsequently, each information item is hierarchized, and is converted into transmission data of a predetermined format. Then, the positional information transmitting unit transmits the transmission data (S703).

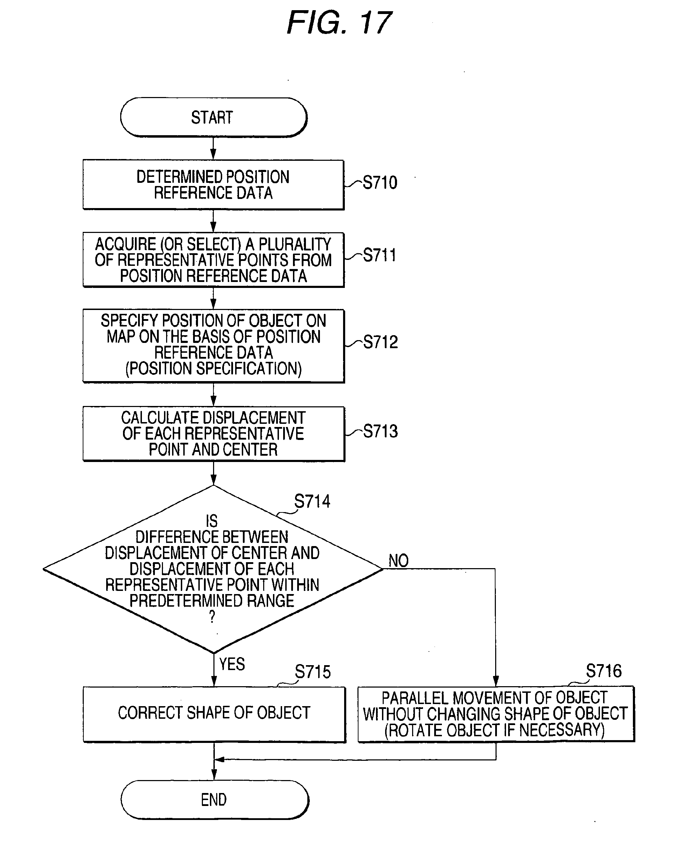

Fig. 17 is a block diagram illustrating the operation of the information acquiring unit 600.

First, the positional information receiving unit 601 receives the transmitted information, and the contour position specifying unit (position referring unit) 602 determines an object used for position reference (S710).

When the transmitter side designates information used for position reference, the positional information acquiring apparatus 600 acquires position reference information according to the designated content. On the other hand, when the transmitter side does not designate information used for position reference, the positional information acquiring apparatus 600 analyzes the transmitted data and selects information that can be used as position reference information (S711).

Then, the contour position specifying unit 602 performs position reference (map matching) to specify the position of a position reference object on the map (S712).

Next, the representative point (reference point) extracting unit 604 extracts reference points for correction and calculates the displacements (movements) thereof before and after position specification (S713).

Then, it is determined whether the displacements (movements) are within a predetermined range (S714). It is determined that the displacements (movements) are within the predetermined range, the internal shape correcting unit 605 corrects the shape of the object (S715). However, when it is determined in Step S714 that the displacements (movements) are beyond the predetermined range, the internal shape of the object is not corrected (reformed), but the correction of the object by parallel translation or rotation is performed (S716).

Then, the internal shape utilizing unit 606 superimposes the transmitted image of the object on the map.

Next, an example of the data structure of the map information provided (transmitted) from the information providing apparatus 500 will be described.

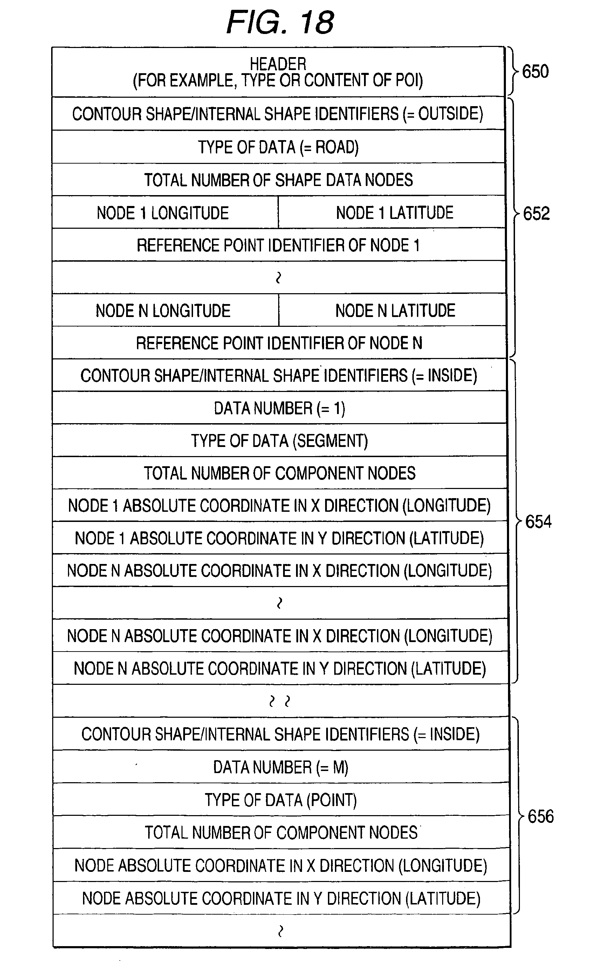

Fig. 18 is a diagram illustrating a hierarchized data structure corresponding to the example shown in Fig. 13A.

As shown in Fig. 18, the data structure includes a header 650, an information item 652 for specifying representative points (nodes) Pe9 to Pe15 for specifying the shapes of roads surrounding an object, and information items 654 and 656 including a plurality of coordinate data for specifying the shape of a narrow road RS3 inside the roads surrounding the object.

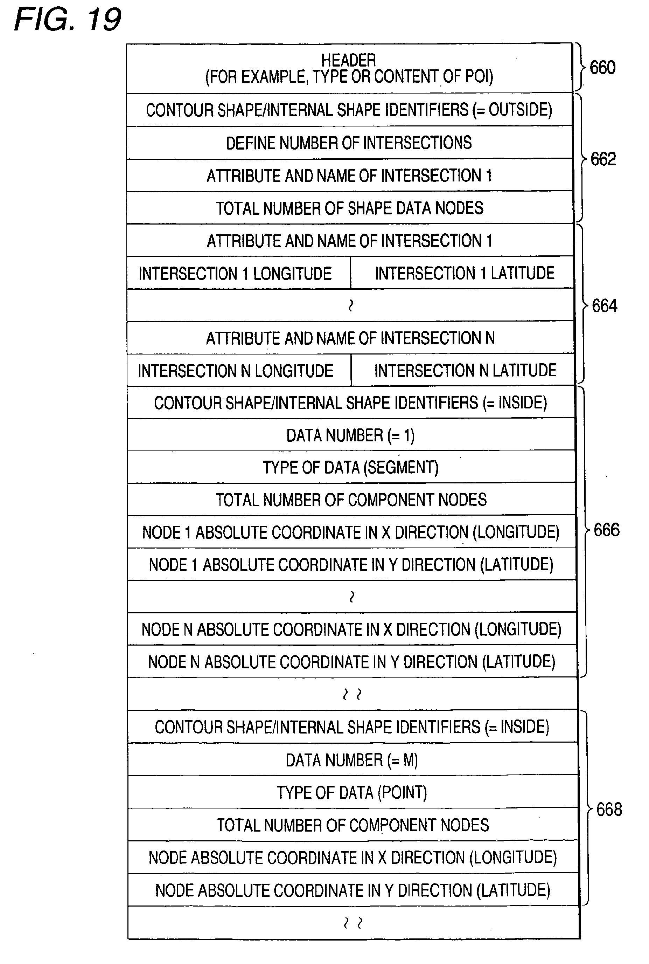

Fig. 19 is a diagram illustrating a hierarchized data structure corresponding to the example shown in Fig. 13B.

The data structure includes a header 660 and information items 666 and 668 for specifying the internal shapes, similar to the data structure shown in Fig. 18. However, the data structure shown in Fig. 19 is characterized in that it has information components 662 and 664 including attribute information items of intersections for specifying the positions of the intersections.

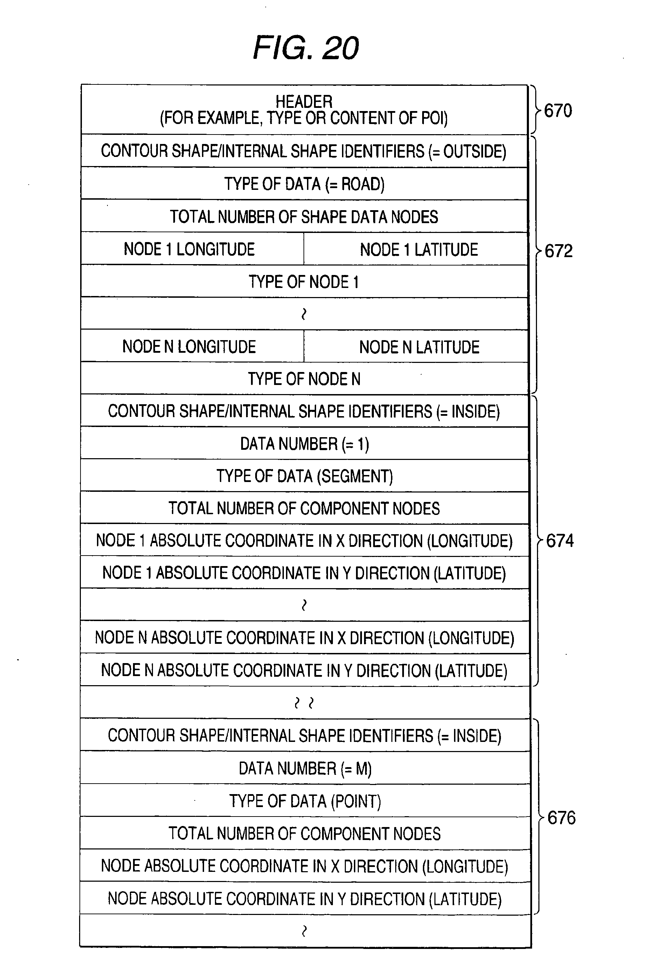

Fig. 20 is a diagram illustrating a hierarchized data structure corresponding to the example shown in Fig. 13C.

The data structure includes a header 670 and information items 674 and 676 for specifying the internal shapes, similar to the data structure shown in Fig. 18. However, the data structure shown in Fig. 20 is characterized in that it has an information component 672 including information on a node type that specifies reference points for correction.

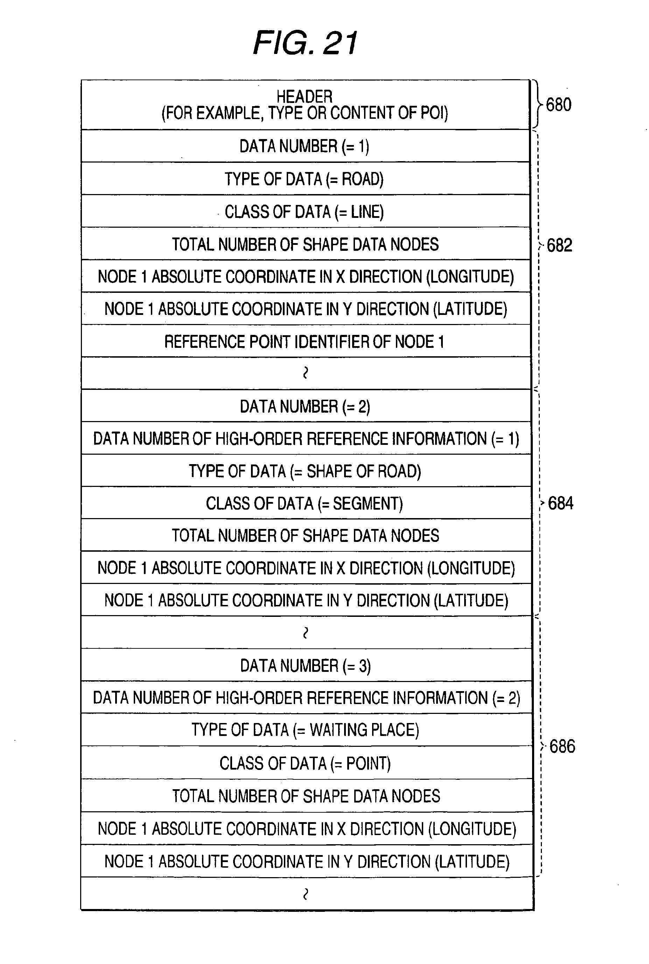

Fig. 21 is a diagram illustrating a data structure corresponding to a system in which an apparatus on the map information provider side does not particularly designate a position reference object, but an apparatus on the map information receiver side independently selects position reference information.

As shown in Fig. 21, a header 680 and information items 682 to 686 on a plurality of objects (components) are hierarchically arranged.

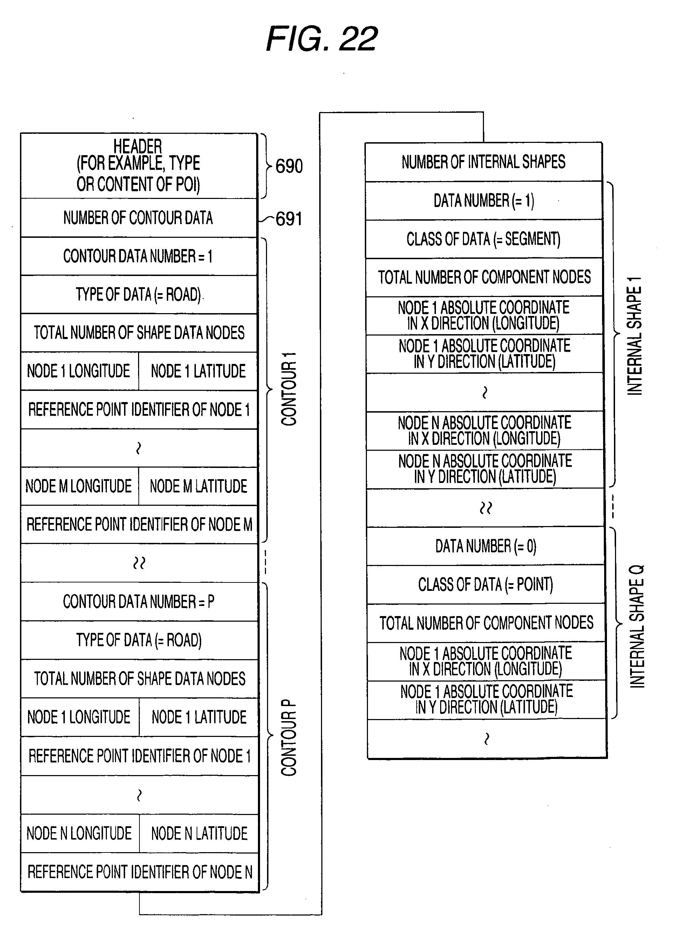

Fig. 22 is a diagram illustrating a hierarchized data structure corresponding to the example (in which a plurality of position reference objects are used) shown in Fig. 14B.

As shown in Fig. 22, the data structure includes a header 690, an information item 691 indicating the total number of contour data (position reference data), a plurality of contour data (data for contours 1 to P), and a plurality of data indicating the internal shapes (internal shapes 1 to Q).

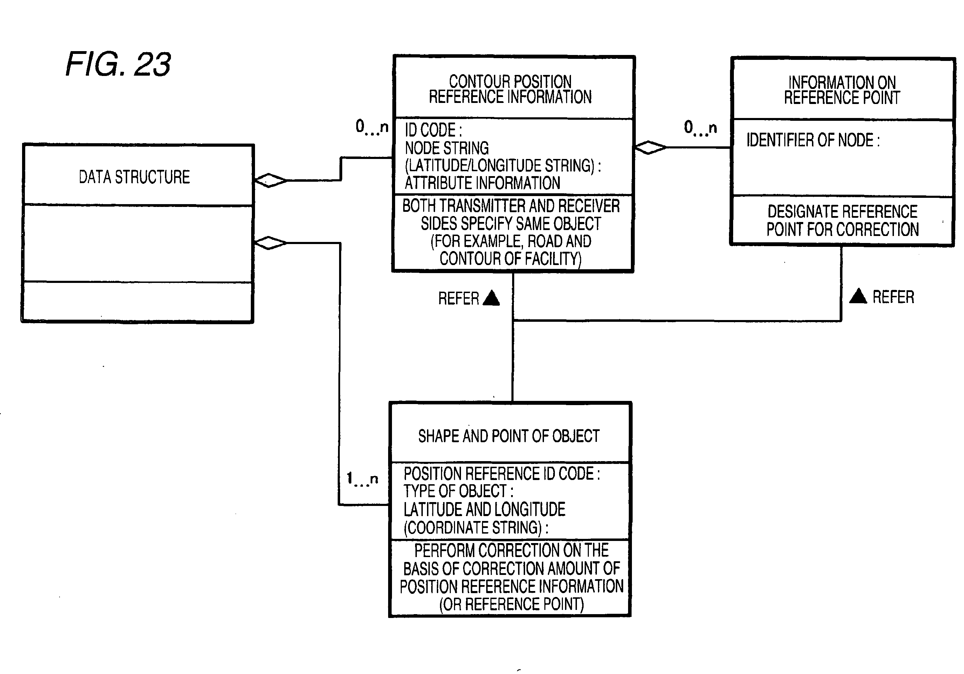

Fig. 23 is a diagram illustrating the basic concept of the data structures shown in Figs. 18 to 22.

Fig. 23 shows the following content.

That is, map information provided from a map information providing apparatus basically includes position reference information for roads surrounding an object and information indicating points forming the object and the shape of the object, and the position reference information includes information for specifying reference points for correcting the shape of the object. Therefore, for example, the positions of the points forming the object and the shape of the object are specified or corrected on the map used by a map information receiving apparatus on the basis of the position reference information for the roads surrounding the object or information on reference points.

The hierarchized data structure includes information on a position reference object and information on reference points for correction as well as data for an object related to the supply of map information, and all the information items are provided as map information, which makes it possible for the map information receiving apparatus to reproduce a plan-view object having a complicated structure and to accurately display the object on the map without incongruity.

As described above, according to the embodiments of the invention, when an object on the first electronic map is superimposed on the second electronic map, it is possible to correct the position or geometrical shape of the object so as to be suitable for the second electronic map. Therefore, it is possible to prevent an object from being inaccurately displayed, or it is possible to prevent an object from being displayed in a distorted shape due to mismatching between the shape of the object and the shape of a background on the second electronic map.

That is, it is possible to accurately superimpose an object on the second electronic map without incongruity.

In particular, since the correction of the geometrical shape of an object as well as the correction of the shape of the object (parallel translation of the object) is performed, it is possible to provide and utilize, for example, information of a plan-view POI having a complicated structure without any difficulties.

Further, various position referring techniques are used to obtain information on an error between different maps, which is required for correction, which makes it possible to effectively and efficiently specify the position of a position reference object.

For example, it is possible to effectively and accurately specify the position of a position reference object by using a shape matching method using the shapes of high-universality roads, a method using intersections of roads as reference points, a method of linking a plurality of representative points (for example, intersections) at the shortest distance and simply reproducing the shapes of roads, a method of extracting a plurality of reference points arranged at various positions by using, for example, the shapes of roads surrounding an object as a position reference object, and a method of obtaining a sufficient amount of information required for correction, using a plurality of position reference objects, to improve the accuracy of correction.

Even when the electronic map (the second electronic map) used by the map information receiving apparatus is inaccurate, the position referring technique makes it possible to accurately specify the position of an object and superimpose the object on the map.

In this way, it is possible to provide map information on a plan-view POI having a complicated structure by using, for example, a car navigation system, and it is possible to effectively use the map information (for example, to display the POI at an accurate position on the map without incongruity).

Further, it is possible to provide information on a detailed road network that is not on the second electronic map by using, for example, a car navigation system, and it is possible to effectively use the map information (for example, to display the information on the road network at an accurate position on the map without incongruity).

Furthermore, the following map information communication method is realized: a map information providing apparatus transmits position reference information and information on an object (for example, information on the position and geometrical shape of the object) to a map information receiving apparatus, and the map information receiving apparatus performs correction using the position reference information to accurately position the object on the map.

In this way, it is possible to realize a new map information utilizing system capable of providing a POI having a complicated structure or information on a detailed road network and utilizing the information.

Further, it is possible to effectively use an intelligent transportation system (ITS).

Although the embodiments of the invention have been described above, the invention is not limited thereto. Therefore, it will be understood by those skilled in the art that various modifications and changes of the invention can be made without departing from the spirit and scope of the invention.

Industrial Applicability

The invention can correct the positional deviation of an object due to an error between different maps and is useful for a map information communication system using, for example, a car navigation system or a mobile communication system.

**Claims**

1. A map information correcting apparatus that corrects a positional deviation of an object related to an electronic map due to an error between different electronic maps, comprising:

    a map information receiving unit that receives information on the object including information on a position reference object arranged close to or near the object that corresponds to a first electronic map;
a position referring unit that specifies the position of the position reference object on the basis of the received information on the object; and
a correcting unit that performs an interpolation process using information on the position of at least one reference point that is extracted from the position reference object on the first electronic map and information on the position of the reference point on a second electronic map to correct at least one of the position and shape of the object so as to be suitable for the second electronic map.

2. The map information correcting apparatus according to claim 1,
wherein the correcting unit performs the interpolation process using at least one of a parallel translation process and a rotation process, on the basis of the deviation between the position of the one reference point extracted from the position reference object on the first electronic map and the position of the one reference point on the second electronic map, to correct the position of the object on the first electronic map so as to be suitable for the second electronic map.

3. The map information correcting apparatus according to claim 2,
wherein the one reference point extracted from the position reference object is the center of the position reference object.

4. The map information correcting apparatus according to claim 1,
wherein the correcting unit performs at least one of a weight interpolation process, a bilinear interpolation process, and affine transformation, using information on the positions of a plurality of reference points that are extracted from the position reference object on the first electronic map and information on the positions of the reference points on the second map, to correct the geometrical shape of the object on the first electronic map so as to be suitable for the second electronic map.

5. The map information correcting apparatus according to claim 4,
wherein the position reference object is a road.

6. The map information correcting apparatus according to claim 5,
wherein the plurality of reference points extracted from the position reference object are a plurality of intersections on the road.

7. The map information correcting apparatus according to claim 6,
wherein the positions of the plurality of intersections are specified by coordinate information indicating the positions of the intersections or attribute information of the intersections, or by the determination result of branched places based on the shape of the road.

8. The map information correcting apparatus according to any one of claims 1 to 4,
wherein the position referring unit specifies the position of the position reference object on the second electronic map by matching using shape information of the position reference object.

9. The map information correcting apparatus according to any one of claims 1 to 4,
wherein the position referring unit determines the shape of the position reference object on the basis of the shortest route linking a plurality of representative points, and specifies the position of the determined position reference object on the second map by matching using shape information of the determined position reference object.

10. The map information correcting apparatus according to any one of claims 1 to 4,
wherein the position reference object is a road,
the shape of the road is determined by linking a plurality of intersections whose positions are specified through the shortest route, and
the position referring unit specifies the position of the road, which is the position reference object, on the second map by matching using shape information of the determined road.

11. The map information correcting apparatus according to any one of claims 1 to 4,
wherein the position reference object has a shape surrounding a portion of or the entire object.

12. The map information correcting apparatus according to any one of claims 1 to 11,

wherein the object is a POI (point of interest) represented by any one of a surface, a line, and a point or a combination thereof, or a portion of the POI.

13. The map information correcting apparatus according to any one of claims 1 to 11,
wherein the object is a road that exists on the first electronic map but does not exist on the second electronic map.

14. A map information correcting method of correcting the positional deviation of an object related to an electronic map due to an error between different electronic maps, comprising the steps of:

receiving information on the object including information on a position reference object arranged close to or near the object that corresponds to a first electronic map;
specifying the position of the position reference object on the basis of the received information on the object; and performing an interpolation process using information on the position of at least one reference point that is extracted from the position reference object on the first electronic map and information on the position of the reference point on a second electronic map to correct at least one of the position and shape of the object so as to be suitable for the second electronic map.

15. A program for allowing a computer to execute the components of the map information correcting apparatus according to any one of claims 1 to 13.

16. An information providing apparatus for providing information on an object related to an electronic map, comprising:

the map information correcting apparatus according to any one of claims 1 to 13.

17. An object information acquiring apparatus for acquiring information on an object related to an electronic map, comprising:

the map information correcting apparatus according to any one of claims 1 to 13.

## FIG. 1A

## FIG. 1B

## FIG. 1C

## FIG. 2A

40a

40b

G1

G2

## FIG. 2B

42a

46a

46b

42b

48a

48b

44b

44a

## FIG. 3A

50a

52a

54a

## FIG. 3B

50b

54b

52b

## FIG. 3C

50b

54a

52a

FIG. 4

FIG. 5

FIG. 6

FIG. 7

## FIG. 8A

## FIG. 8B

## FIG. 8C

## FIG. 8D

## FIG. 8E

## FIG. 9A

## FIG. 9B

## FIG. 9C

## FIG. 9D

# FIG. 10

## FIG. 11A

RD1

RS1

## FIG. 11B

QD1

## FIG. 11C

RD1

RS1

QD1

## FIG. 12A

## FIG. 12B

## FIG. 12C

## FIG. 12D

## FIG. 13A

Pe9  Pe10  Pe11

QD3

RD3

RS3

Pe12

Pe16

Pe13

Pe15  Pe14

## FIG. 13B

Pe17

QD3

RD3

Pe18

RS3

Pe20  Pe19

## FIG. 13C

Pe17 (ATTRIBUTE OF NODE = INTERSECTION)

Pe18

QD3

RD4

RS3

Pe20

Pe19

## FIG. 13D

C1  C2

QD3

RD4

RS3

C4  C3

## FIG. 14A

## FIG. 14B

## FIG. 14C

## FIG. 15

**600**

**602** CONTOUR POSITION SPECIFYING UNIT (POSITION REFERRING UNIT)

**601** POSITIONAL INFORMATION RECEIVING UNIT

**604** REPRESENTATIVE POINT EXTRACTING UNIT

**605** INTERNAL SHAPE CORRECTING UNIT

**606** INTERNAL SHAPE UTILIZING UNIT

**603** DIGITAL MAP DATABASE B

**500**

**508** POSITIONAL INFORMATION TRANSMITTING UNIT

**504** DATA EXTRACTING UNIT

**505** CONTOUR POSITION REFERENCE INFORMATION EXTRACTING UNIT

**506** INTERNAL SHAPE EXTRACTING UNIT

**507** DIGITAL MAP DATABASE A

**502** OBJECT DETERMINING UNIT

**503** OBJECT DATABASE

# FIG. 16

```
                    ┌─────────────────────┐
                    │        START        │
                    └─────────────────────┘
                              │
                              ▼
          ┌─────────────────────────────────┐
          │      DETERMINE OBJECT           │
          │      TO BE TRANSMITTED          │──S700
          └─────────────────────────────────┘
                              │
                              ▼
          ┌─────────────────────────────────┐
          │  EXTRACT POSITION REFERENCE     │
          │  INFORMATION, FOR EXAMPLE       │──S701
          └─────────────────────────────────┘
                              │
                              ▼
          ┌─────────────────────────────────┐
          │    EXTRACT REPRESENTATIVE       │
          │    POINTS FROM POSITION         │──S702
          │    REFERENCE INFORMATION        │
          └─────────────────────────────────┘
                              │
                              ▼
          ┌─────────────────────────────────┐
          │   CONVERT INFORMATION IN        │
          │ TRANSMISSION DATA FORMAT AND    │──S703
          │ TRANSMIT CONVERTED INFORMATION  │
          └─────────────────────────────────┘
                              │
                              ▼
                    ┌─────────────────────┐
                    │         END         │
                    └─────────────────────┘
```

# FIG. 17

```
                    ┌─────────────────────┐
                    │        START        │
                    └─────────────────────┘
                              │
                              ▼
              ┌───────────────────────────────┐
              │   DETERMINED POSITION         │───S710
              │   REFERENCE DATA              │
              └───────────────────────────────┘
                              │
                              ▼
              ┌───────────────────────────────┐
              │ ACQUIRE (OR SELECT) A PLURALITY│
              │ OF REPRESENTATIVE POINTS FROM  │───S711
              │ POSITION REFERENCE DATA        │
              └───────────────────────────────┘
                              │
                              ▼
              ┌───────────────────────────────┐
              │ SPECIFY POSITION OF OBJECT ON  │
              │ MAP ON THE BASIS OF POSITION   │───S712
              │ REFERENCE DATA                 │
              │ (POSITION SPECIFICATION)       │
              └───────────────────────────────┘
                              │
                              ▼
              ┌───────────────────────────────┐
              │ CALCULATE DISPLACEMENT         │
              │ OF EACH REPRESENTATIVE         │───S713
              │ POINT AND CENTER               │
              └───────────────────────────────┘
                              │
                              ▼
                         S714
                    ╱────────────╲
                   ╱      IS       ╲
                  ╱ DIFFERENCE      ╲
                 ╱ BETWEEN           ╲  NO
                ╱ DISPLACEMENT OF     ╲──────────┐
                ╲ CENTER AND           ╱          │
                 ╲ DISPLACEMENT OF    ╱           │
                  ╲ EACH REPRESENT-  ╱            │
                   ╲ ATIVE POINT    ╱             │
                    ╲ WITHIN       ╱              │
                     ╲PREDETER-   ╱               │
                      ╲MINED     ╱                │
                       ╲RANGE?  ╱                 │
                        ╲──────╱                  │
                          │ YES   S715            │
                          ▼                       ▼  S716
              ┌───────────────────────┐  ┌───────────────────────────────┐
              │ CORRECT SHAPE OF      │  │ PARALLEL MOVEMENT OF OBJECT    │
              │ OBJECT                │  │ WITHOUT CHANGING SHAPE OF OBJECT│
              └───────────────────────┘  │ (ROTATE OBJECT IF NECESSARY)   │
                          │              └───────────────────────────────┘
                          │◄──────────────────────┘
                          ▼
                    ┌─────────────────────┐
                    │        END          │
                    └─────────────────────┘
```

## FIG. 18

| | |
|---|---|
| HEADER<br>(FOR EXAMPLE, TYPE OR CONTENT OF POI) | 650 |

| CONTOUR SHAPE/INTERNAL SHAPE IDENTIFIERS (= OUTSIDE) | |
|---|---|
| TYPE OF DATA (= ROAD) | |
| TOTAL NUMBER OF SHAPE DATA NODES | |
| NODE 1 LONGITUDE | NODE 1 LATITUDE |
| REFERENCE POINT IDENTIFIER OF NODE 1 | |
| ⸻ | |
| NODE N LONGITUDE | NODE N LATITUDE |
| REFERENCE POINT IDENTIFIER OF NODE N | 652 |

| CONTOUR SHAPE/INTERNAL SHAPE IDENTIFIERS (= INSIDE) | |
|---|---|
| DATA NUMBER (= 1) | |
| TYPE OF DATA (SEGMENT) | |
| TOTAL NUMBER OF COMPONENT NODES | |
| NODE 1 ABSOLUTE COORDINATE IN X DIRECTION (LONGITUDE) | |
| NODE 1 ABSOLUTE COORDINATE IN Y DIRECTION (LATITUDE) | |
| NODE N ABSOLUTE COORDINATE IN X DIRECTION (LONGITUDE) | 654 |
| ⸻ | |
| NODE N ABSOLUTE COORDINATE IN X DIRECTION (LONGITUDE) | |
| NODE N ABSOLUTE COORDINATE IN Y DIRECTION (LATITUDE) | |

| ⸻ ⸻ | |
|---|---|
| CONTOUR SHAPE/INTERNAL SHAPE IDENTIFIERS (= INSIDE) | |
| DATA NUMBER (= M) | |
| TYPE OF DATA (POINT) | |
| TOTAL NUMBER OF COMPONENT NODES | |
| NODE ABSOLUTE COORDINATE IN X DIRECTION (LONGITUDE) | 656 |
| NODE ABSOLUTE COORDINATE IN Y DIRECTION (LATITUDE) | |
| ⸻ | |

## FIG. 19

| |
|---|
| HEADER<br>(FOR EXAMPLE, TYPE OR CONTENT OF POI) |

} 660

| |
|---|
| CONTOUR SHAPE/INTERNAL SHAPE IDENTIFIERS (= OUTSIDE) |
| DEFINE NUMBER OF INTERSECTIONS |
| ATTRIBUTE AND NAME OF INTERSECTION 1 |
| TOTAL NUMBER OF SHAPE DATA NODES |

} 662

| | |
|---|---|
| ATTRIBUTE AND NAME OF INTERSECTION 1 | |
| INTERSECTION 1 LONGITUDE | INTERSECTION 1 LATITUDE |
| | |
| ATTRIBUTE AND NAME OF INTERSECTION N | |
| INTERSECTION N LONGITUDE | INTERSECTION N LATITUDE |

} 664

| |
|---|
| CONTOUR SHAPE/INTERNAL SHAPE IDENTIFIERS (= INSIDE) |
| DATA NUMBER (= 1) |
| TYPE OF DATA (SEGMENT) |
| TOTAL NUMBER OF COMPONENT NODES |
| NODE 1 ABSOLUTE COORDINATE IN X DIRECTION (LONGITUDE) |
| NODE 1 ABSOLUTE COORDINATE IN Y DIRECTION (LATITUDE) |
| |
| NODE N ABSOLUTE COORDINATE IN X DIRECTION (LONGITUDE) |
| NODE N ABSOLUTE COORDINATE IN Y DIRECTION (LATITUDE) |

} 666

| |
|---|
| CONTOUR SHAPE/INTERNAL SHAPE IDENTIFIERS (= INSIDE) |
| DATA NUMBER (= M) |
| TYPE OF DATA (POINT) |
| TOTAL NUMBER OF COMPONENT NODES |
| NODE ABSOLUTE COORDINATE IN X DIRECTION (LONGITUDE) |
| NODE ABSOLUTE COORDINATE IN Y DIRECTION (LATITUDE) |

} 668

## FIG. 20

| | |
|---|---|
| HEADER<br>(FOR EXAMPLE, TYPE OR CONTENT OF POI) | 670 |
| CONTOUR SHAPE/INTERNAL SHAPE IDENTIFIERS (= OUTSIDE) | |
| TYPE OF DATA (= ROAD) | |
| TOTAL NUMBER OF SHAPE DATA NODES | |
| NODE 1 LONGITUDE NODE 1 LATITUDE | 672 |
| TYPE OF NODE 1 | |
| ⟨ | |
| NODE N LONGITUDE NODE N LATITUDE | |
| TYPE OF NODE N | |
| CONTOUR SHAPE/INTERNAL SHAPE IDENTIFIERS (= INSIDE) | |
| DATA NUMBER (= 1) | |
| TYPE OF DATA (SEGMENT) | |
| TOTAL NUMBER OF COMPONENT NODES | |
| NODE 1 ABSOLUTE COORDINATE IN X DIRECTION (LONGITUDE) | 674 |
| NODE 1 ABSOLUTE COORDINATE IN Y DIRECTION (LATITUDE) | |
| ⟨ | |
| NODE N ABSOLUTE COORDINATE IN X DIRECTION (LONGITUDE) | |
| NODE N ABSOLUTE COORDINATE IN Y DIRECTION (LATITUDE) | |
| ⟨ ⟨ | |
| CONTOUR SHAPE/INTERNAL SHAPE IDENTIFIERS (= INSIDE) | |
| DATA NUMBER (= M) | |
| TYPE OF DATA (POINT) | 676 |
| TOTAL NUMBER OF COMPONENT NODES | |
| NODE ABSOLUTE COORDINATE IN X DIRECTION (LONGITUDE) | |
| NODE ABSOLUTE COORDINATE IN Y DIRECTION (LATITUDE) | |
| ⟨ | |

# FIG. 21

| |
|---|
| HEADER<br>(FOR EXAMPLE, TYPE OR CONTENT OF POI) |
| DATA NUMBER (= 1) |
| TYPE OF DATA (= ROAD) |
| CLASS OF DATA (= LINE) |
| TOTAL NUMBER OF SHAPE DATA NODES |
| NODE 1 ABSOLUTE COORDINATE IN X DIRECTION (LONGITUDE) |
| NODE 1 ABSOLUTE COORDINATE IN Y DIRECTION (LATITUDE) |
| REFERENCE POINT IDENTIFIER OF NODE 1 |
| 〈 |
| DATA NUMBER (= 2) |
| DATA NUMBER OF HIGH-ORDER REFERENCE INFORMATION (= 1) |
| TYPE OF DATA (= SHAPE OF ROAD) |
| CLASS OF DATA (= SEGMENT) |
| TOTAL NUMBER OF SHAPE DATA NODES |
| NODE 1 ABSOLUTE COORDINATE IN X DIRECTION (LONGITUDE) |
| NODE 1 ABSOLUTE COORDINATE IN Y DIRECTION (LATITUDE) |
| 〈 |
| DATA NUMBER (= 3) |
| DATA NUMBER OF HIGH-ORDER REFERENCE INFORMATION (= 2) |
| TYPE OF DATA (= WAITING PLACE) |
| CLASS OF DATA (= POINT) |
| TOTAL NUMBER OF SHAPE DATA NODES |
| NODE 1 ABSOLUTE COORDINATE IN X DIRECTION (LONGITUDE) |
| NODE 1 ABSOLUTE COORDINATE IN Y DIRECTION (LATITUDE) |
| 〈 |

680

682

684

686

# FIG. 22

| | |
|---|---|
| HEADER (FOR EXAMPLE, TYPE OR CONTENT OF POI) | 690 |
| NUMBER OF CONTOUR DATA | 691 |
| CONTOUR DATA NUMBER = 1 | |
| TYPE OF DATA (= ROAD) | |
| TOTAL NUMBER OF SHAPE DATA NODES | |

| | |
|---|---|
| NODE 1 LONGITUDE | NODE 1 LATITUDE |

| |
|---|
| REFERENCE POINT IDENTIFIER OF NODE 1 |
| ⁓ |

| | |
|---|---|
| NODE M LONGITUDE | NODE M LATITUDE |

| |
|---|
| REFERENCE POINT IDENTIFIER OF NODE M |
| ⁓⁓ |
| CONTOUR DATA NUMBER = P |
| TYPE OF DATA (= ROAD) |
| TOTAL NUMBER OF SHAPE DATA NODES |

| | |
|---|---|
| NODE 1 LONGITUDE | NODE 1 LATITUDE |

| |
|---|
| REFERENCE POINT IDENTIFIER OF NODE 1 |
| ⁓ |

| | |
|---|---|
| NODE N LONGITUDE | NODE N LATITUDE |

| |
|---|
| REFERENCE POINT IDENTIFIER OF NODE N |

CONTOUR 1

CONTOUR P

| |
|---|
| NUMBER OF INTERNAL SHAPES |
| DATA NUMBER (= 1) |
| CLASS OF DATA (= SEGMENT) |
| TOTAL NUMBER OF COMPONENT NODES |
| NODE 1 ABSOLUTE COORDINATE IN X DIRECTION (LONGITUDE) |
| NODE 1 ABSOLUTE COORDINATE IN Y DIRECTION (LATITUDE) |
| ⁓ |
| NODE N ABSOLUTE COORDINATE IN X DIRECTION (LONGITUDE) |
| NODE N ABSOLUTE COORDINATE IN Y DIRECTION (LATITUDE) |
| ⁓⁓ |
| DATA NUMBER (= 0) |
| CLASS OF DATA (= POINT) |
| TOTAL NUMBER OF COMPONENT NODES |
| NODE 1 ABSOLUTE COORDINATE IN X DIRECTION (LONGITUDE) |
| NODE 1 ABSOLUTE COORDINATE IN Y DIRECTION (LATITUDE) |
| ⁓ |

INTERNAL SHAPE 1

INTERNAL SHAPE Q

**FIG. 23**

```
┌─────────────────────────┐
│   CONTOUR POSITION       │
│   REFERENCE INFORMATION  │
├─────────────────────────┤
│ ID CODE :                │
│ NODE STRING              │
│ (LATITUDE/LONGITUDE      │
│  STRING) :               │
│ ATTRIBUTE INFORMATION    │
├─────────────────────────┤
│ BOTH TRANSMITTER AND     │
│ RECEIVER SIDES SPECIFY   │
│ SAME OBJECT              │
│ (FOR EXAMPLE, ROAD AND   │
│ CONTOUR OF FACILITY)     │
└─────────────────────────┘
```

┌─────────────────────────┐
│                         │
│    DATA STRUCTURE       │
├─────────────────────────┤
│                         │
├─────────────────────────┤
│                         │
└─────────────────────────┘

0...n

```
┌──────────────────────────┐
│   INFORMATION ON          │
│   REFERENCE POINT         │
├──────────────────────────┤
│ IDENTIFIER OF NODE :      │
│                          │
├──────────────────────────┤
│ DESIGNATE REFERENCE       │
│ POINT FOR CORRECTION      │
└──────────────────────────┘
```

0...n

REFER ▲

▲ REFER

1...n

```
┌─────────────────────────────┐
│   SHAPE AND POINT OF OBJECT  │
├─────────────────────────────┤
│ POSITION REFERENCE ID CODE : │
│ TYPE OF OBJECT :             │
│ LATITUDE AND LONGITUDE       │
│ (COORDINATE STRING) :        │
├─────────────────────────────┤
│ PERFORM CORRECTION ON THE    │
│ BASIS OF CORRECTION AMOUNT   │
│ OF POSITION REFERENCE        │
│ INFORMATION                  │
│ (OR REFERENCE POINT)         │
└─────────────────────────────┘
```

## INTERNATIONAL SEARCH REPORT

| International application No. |
| --- |
| PCT/JP2005/012598 |

A. CLASSIFICATION OF SUBJECT MATTER
Int.Cl$^7$ G09B29/00, G01C21/00, G06T11/60, G09B29/10

According to International Patent Classification (IPC) or to both national classification and IPC

B. FIELDS SEARCHED

Minimum documentation searched (classification system followed by classification symbols)
Int.Cl$^7$ G09B29/00, G01C21/00, G06T11/60, G09B29/10

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2002-236444 A (Matsushita Electric Industrial Co., Ltd.), 23 August, 2002 (23.08.02), Par. Nos. [0068] to [0079], [0100], [0101], [0105] to [0107] & WO 2002/046697 A1    & AU 2259102 A & CA 2428347 A            & US 2003/0078720 A1 & CN 1486417 A | 1-17 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 27 September, 2005 (27.09.05) | Date of mailing of the international search report 18 October, 2005 (18.10.05) |
| --- | --- |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/012598

C (Continuation). DOCUMENTS CONSIDERED TO BE RELEVANT

| Category* | Citation of document, with indication, where appropriate, of the relevant passages | Relevant to claim No. |
|---|---|---|
| Y | "Sokuchi Seika 2000 Donyu ni Tomonau Kokyo Sokuryo Seika Zahyo Henkan Manual", 03 September, 2003 (03.09.03), Ministry of Land, Infrastructure and Transport Geographical Suevey Institute Govement of Japan, [retrieval date 27 September, 2005 (27.09.05)], Internat <URL:http://psgsv.gsi.go.jp/koukyou/henkan_manual.pdf/henkan_manual_p12-p23.pdf>, pages 20 to 22 | 1-17 |
| Y | JP 2004-46491 A (Fujitsu Ltd.), 12 February, 2004 (12.02.04), Par. No. [0025] (Family: none) | 3 |

Form PCT/ISA/210 (continuation of second sheet) (January 2004)

**EP 1 901 260 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001041757 A